# EUROPEAN PATENT SPECIFICATION

(11) **EP 3 965 334 B1**
(45) Date of publication and mention of the grant of the patent: **08.11.2023**
(21) Application number: 20799349.4
(22) Date of filing: 17.02.2020
(51) Int. Cl.: H04L 1/18

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 30.04.2019 CN 201910364459
(43) Date of publication of application: 09.03.2022
(73) Proprietor: Huawei Technologies Co., Ltd., Shenzhen, Guangdong 518129 (CN)
(72) Inventor: LI, Chao, Shenzhen, Guangdong 518129 (CN); ZHANG, Xingwei, Shenzhen, Guangdong 518129 (CN); HUANG, Haining, Shenzhen, Guangdong 518129 (CN); YANG, Fan, Shenzhen, Guangdong 518129 (CN)
(74) Representative: Gill Jennings & Every LLP
(86) International application number: PCT/CN2020/075485
(87) International publication number: WO 2020/220793

(56) References cited:
- WO-A1-2017/127245
- WO-A1-2018/145502
- CN-A- 107 995 605
- CN-A- 108 400 843
- NTT DOCOMO ET AL: "NR Sidelink Physical Layer Procedure", 3GPP DRAFT; R1-1905425_SL PHY PROCEDURE_FIN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Xi'an, China; 20190408 - 20190412 3 April 2019 (2019-04-03), XP051707495, Retrieved from the Internet: URL:http://www.3gpp.org/ftp/tsg%5Fran/WG1% 5FRL1/TSGR1%5F96b/Docs/R1%2D1905425%2Ezip [retrieved on 2019-04-03]
- SONY: "Discussion on HARQ feedback for NR V2X communication", 3GPP DRAFT; R1-1904257__SONY__DISCUSSION ON HARQ FEEDBACK FOR NR V2X COMMUNICATION_FINAL, 3RD GENERATION PARTNERSHIP PROJECT (3GPP), MOBILE COMPETENCE CENTRE ; 650, ROUTE DES LUCIOLES ; F-06921 SOPHIA , vol. RAN WG1, no. Xi'an, China; 20190408 - 20190412 2 April 2019 (2019-04-02), XP051707169, Retrieved from the Internet: URL:http://www.3gpp.org/ftp/tsg%5Fran/WG1% 5FRL1/TSGR1%5F96b/Docs/R1%2D1904257%2Ezip [retrieved on 2019-04-02]
- LG ELECTRONICS: "3GPP TSG RAN meeting #83 RP-190225", Study on NR V2X, 21 March 2019 (2019-03-21), XP051690073, DOI: 20200417144956X

## Description

### TECHNICAL FIELD

Embodiments of this application relate to the field of communication technologies, and in particular, to a communication method and apparatus.

### BACKGROUND

Device-to-device (device-to-device, D2D) communication, vehicle-to-vehicle (vehicle-to-vehicle, V2V) communication, vehicle-to-pedestrian (vehicle-to-pedestrian, V2P) communication, or vehicle-to-infrastructure/network (vehicle-to infrastructure/network, V2I/N) communication is a technology for direct communication between terminal devices. V2V, V2P, and V2I/N are collectively referred to as V2X (vehicle-to-everything, V2X), that is, communication between a vehicle and everything. In 5G new radio (New Radio, NR) V2X, a distance between a receiver and a transmitter needs to be determined to meet a transmission reliability requirement. In the conventional technology, a base station may send a positioning reference signal, so that the base station positions a terminal within a specific precision range.

However, in an actual application, geographical location information of a transmitter or a receiver may be lost due to various reasons. Therefore, according to an existing method, the receiver cannot determine a distance between the transmitter and the receiver on a sidelink based on the geographical location information, affecting service transmission efficiency.

3GPP contribution R1-190545 discusses NR Sidelink Physical Layer Procedure. Reference is made to TR 38.885 in which "when SL HARQ feedback is enabled for groupcast, it is supported to use TX-RX distance and/or RSRP in deciding whether to send HARQ feedback". To support this feature, it is proposed that range requirement needs to be indicated per PSSCH, since the packet range requirement is not known to RX-UE(s). Regarding how to indicate it, range requirements can be indexed and an index is indicated via the SCI associating with PSSCH transmission.

3GPP contribution R1-1904257 discusses HARQ feedback for NR V2X communication. The following proposals and observations are made: Proposal 1: When using Tx-Rx distance in deciding whether to send HARQ feedback, the distance information is implicitly derived. Proposal 2: For the case where the receiver UE transmits only NACK, support that the receiver UE decides whether to send HARQ feedback. Proposal 3: For the case where the receiver UE transmits ACK/NACK, support that the transmitter UE decides whether to send HARQ feedback and then indicates the decision to the receiver UE. Observation 1: Using either distance or RSRP to decide whether to send HARQ feedback may depend on the operation scenario. Proposal 4: Either TX-RX distance or RSRP is used in deciding whether to send HARQ feedback. FFS the impact on overhead due to signaling the information on distance.

WO 2018/145502 A1 describes a re-transmission feedback and triggering method, a device and a computer storage medium, comprising: receiving a control channel for a broadcast message; decoding and verifying a service channel in a resource indicated by the control channel if the decoding and verification of the control channel are correct; obtaining feedback information corresponding to the broadcast message according to the result of the decoding and verification of the service channel; measuring a channel parameter; determining whether it is required to feed back the feedback information in the feedback channel according to the feedback information and the channel parameter; when needed, encoding and modulating the feedback information, and then spread-spectrum mapping the same to the feedback channel in a time-frequency domain and transmitting. Receiving the feedback information in the feedback channel, decoding the feedback information, and measuring energy of the feedback channel; and determining whether it is required to trigger a re-transmission process according to at least one of the following: a decoding result of the feedback information, the energy of the feedback channel, the number of the feedback channels, and the type of the broadcast message.

### SUMMARY

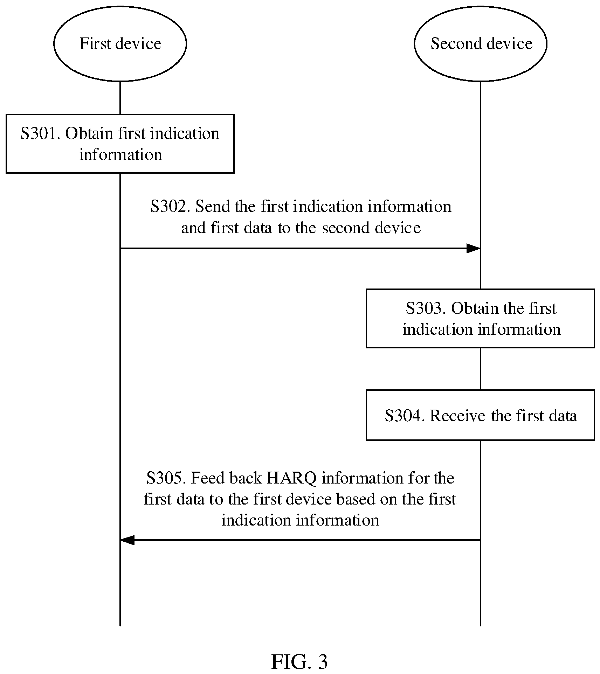

Embodiments of this application provide a communication method and apparatus, to improve service transmission efficiency and communication reliability when geographical location information of a transmitter or a receiver is lost.
The invention is defined by the appended claims. The following embodiments of HARQ feedback as depicted in fig. 3 are used to explain the claimed invention but do not form part of it. Other embodiments discussed below are not embodiments of the claimed invention.

### BRIEF DESCRIPTION OF DRAWINGS

FIG. 1 is a schematic diagram of a V2X communication scenario according to an embodiment of this application;
FIG. 2 is a schematic diagram of a structure of a communication device according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic diagram of composition of a first device according to an embodiment of this application;
FIG. 6 is a schematic diagram of composition of a second device according to an embodiment of this application;
FIG. 7 is a schematic diagram of composition of another first device according to an embodiment of this application; and
FIG. 8 is a schematic diagram of composition of another second device according to an embodiment of this application.

### DESCRIPTION OF EMBODIMENTS

The following describes technical solutions in the embodiments of this application with reference to accompanying drawings in the embodiments of this application. In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one (piece) of a, b, or c may represent: a, b, c, a-b, a-c, b-c, or a-b-c, where a, b, and c may be singular or plural. In addition, to clearly describe the technical solutions in the embodiments of this application, terms such as "first" and "second" are used in the embodiments of this application to distinguish between same items or similar items that provide basically same functions or purposes. A person skilled in the art may understand that the terms such as "first" and "second" do not limit a quantity and an execution sequence. For example, "first" in a first device and "second" in a second device in the embodiments of this application are merely used to distinguish between different devices.

It should be noted that, in this application, the term such as "example" or "for example" is used to represent giving an example, an illustration, or a description. Any embodiment or design described as an "example" or with "for example" in this application should not be explained as being more preferred or having more advantages than another embodiment or design scheme. Exactly, use of the word "example" or "for example" is intended to present a related concept in a specific manner.

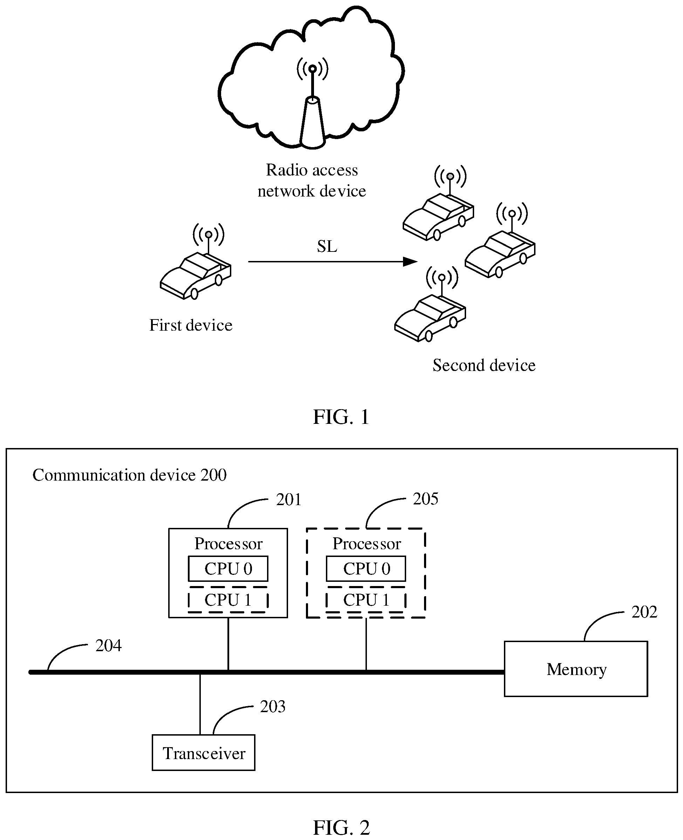

The embodiments of this application provide a communication method. The communication method is applied to a V2X communication scenario shown in FIG. 1. As shown in FIG. 1, a first device communicates with a second device by using a sidelink (sidelink, SL). The sidelink is a supplementary link in a V2X network. The V2X network further includes an uplink (uplink) and a downlink (downlink) in addition to the supplementary link.

For example, V2X communication includes vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. V2V communication in which both the first device and the second device are vehicles is merely used as an example in FIG. 1 for description. A specific V2X communication scenario is not limited in the embodiments of this application. For example, communication between the first device and the second device may be communication between vehicle-mounted devices, communication between a road side unit (road side unit, RSU) and a vehicle-mounted device and/or a network device (for example, a base station device), or communication between a network device (for example, a base station device) and a vehicle-mounted device and/or an RSU. The network device may be an LTE base station device, an NR base station device, or a base station in a subsequent evolved system. It may be understood that specific forms of the first device and the second device are not limited in the embodiments of this application, and the descriptions herein are merely examples. For example, a radio access network device in FIG. 1 may be a base station, or a device that is in a network and that provides radio access.

It may be understood that the communication method provided in this application is not only applicable to the sidelink shown in FIG. 1, but also applicable to a cellular link. A scenario to which the communication method is applicable is not limited in the embodiments of this application, and the descriptions herein are merely examples. The first device and the second device in the embodiments of this application are communication devices, and the communication device may be a terminal device, or may be a network device. When the first device and seconde device are a network devices, the sidelink may be a link between base stations, for example, a link between macro base stations, a link between a macro base station and a small base station, a link between a master base station and a secondary base station, a link between master base stations, or a link between secondary base stations. This is not limited in the embodiments of this application.

FIG. 2 shows a communication device according to an embodiment of this application. The communication device may be a first device or a second device in this application. The communication device may be a vehicle, a vehicle-mounted communication apparatus or a vehicle-mounted terminal installed on a vehicle to assist in driving of the vehicle, a chip in the vehicle-mounted communication apparatus or the vehicle-mounted terminal, or one or more components or units built in a vehicle-mounted module, a vehicle-mounted component, a vehicle-mounted chip, or a vehicle-mounted unit of the vehicle. The vehicle-mounted terminal may be a device configured to implement a wireless communication function, for example, a terminal or a chip that can be used in the terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The vehicle-mounted terminal may be movable or fixed.

As shown in FIG. 2, the communication device 200 includes at least one processor 201, a memory 202, a transceiver 203, and a communication bus 204.

The following specifically describes each component of the communication device with reference to FIG. 2.

The processor 201 is a control center of the communication device, and may be one processor or may be a general name of a plurality of processing elements. For example, the processor 201 may be a central processing unit (central processing unit, CPU) or an application-specific integrated circuit (application-specific integrated circuit, ASIC), or may be configured as one or more integrated circuits implementing the embodiments of the present invention, for example, one or more digital signal processors (digital signal processor, DSP) or one or more field programmable gate arrays (field programmable gate array, FPGA).

The processor 201 may perform various functions of the communication device by running or executing a software program stored in the memory 202 and invoking data stored in the memory 202.

During specific implementation, in an embodiment, the processor 201 may include one or more CPUs, for example, a CPU 0 and a CPU 1 shown in FIG. 2.

During specific implementation, in an embodiment, the communication device may include a plurality of processors, for example, the processor 201 and a processor 205 shown in FIG. 2. Each of the processors may be a single-core (single-CPU) processor or may be a multi-core (multi-CPU) processor. The processor herein may be one or more communication devices, circuits, and/or processing cores configured to process data (for example, computer program instructions).

The memory 202 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc), a magnetic disk storage medium or another magnetic storage device, or any other medium that can be used to carry or store expected program code in a form of an instruction or a data structure and that can be accessed by a computer. This is not limited thereto. The memory 202 may exist independently and is connected to the processor 201 by using the communication bus 204. Alternatively, the memory 202 may be integrated with the processor 201.

The memory 202 is configured to store a software program for executing solutions of the present invention, and the processor 201 controls execution of the software program.

The transceiver 203 is configured to communicate with another communication device. Certainly, the transceiver 203 may be further configured to communicate with a communication network, such as the Ethernet, a radio access network (radio access network, RAN), or a wireless local area network (wireless local area network, WLAN). The transceiver 203 may include: a receiving unit for implementing a receiving function, and a sending unit for implementing a sending function.

The communication bus 204 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 2, but this does not mean that there is only one bus or only one type of bus.

The structure of the communication device shown in FIG. 2 does not constitute a limitation on the communication device. The communication device may include more or fewer components than those shown in the figure, or combine some components, or have different component arrangements.

To ensure performance requirements on reliability, a latency, and a transmission rate of data transmission in an NR-V2X network, it needs to be determined that a distance between a receiver and a transmitter falls within a range of a minimum communication distance, to ensure the reliability of the data transmission. To meet the foregoing performance requirements, the distance between the receiver and the transmitter needs to be determined. However, geographical location information of a transmitter (the first device in the embodiments of this application) or a receiver (the second device in the embodiments of this application) may be lost due to various reasons. Therefore, the receiver cannot determine a distance between the transmitter and the receiver on a sidelink based on the geographical location information of the transmitter, affecting service transmission efficiency.

To resolve a problem in the conventional technology that the service transmission efficiency is affected because the receiver cannot determine the distance between the receiver and the transmitter based on the geographical location information when the geographical location information of the transmitter or the receiver is lost, the embodiments of this application provide a communication method, in which a receiver can be indicated to switch a feedback manner based on signaling sent by a transmitter, to improve reliability of data transmission.

FIG. 3 shows a communication method according to an embodiment of this application. The communication method includes steps S301 to S305.

S301. A first device obtains first indication information.

The first indication information includes first information, and the first information is used to indicate a second device to feed back hybrid automatic repeat request (hybrid automatic repeat request, HARQ) information for first data based on distance information, and/or indicate the second device to feed back HARQ information for the first data based on information about signal quality. The first data is data sent by the first device, and the second device is a device that receives the first data. In this embodiment of this application, the first device is a transmitter when sending the first data, and the second device is a receiver when receiving the first data. Optionally, the first information may alternatively be used to indicate the second device not to feed back HARQ information for the first data.

For example, the distance information may be a distance between the first device and the second device. The information about the signal quality may be information about signal quality of a signal sent by the first device and received by the second device, for example, may be signal quality that is of the first data and that is sent by the first device and received by the second device, may be signal quality that is of the first indication information and that is sent by the first device and received by the second device, may be signal quality of a reference signal sent in a slot for sending the first data, may be signal quality of a signal existing in a period of time before the first device sends the first data, or may be a channel congestion degree. This is not limited in this embodiment of this application, and descriptions are provided herein by way of example only.

Optionally, in this application, there may be one second device, a group of second devices, or an unlimited quantity of second devices. When the first device performs sidelink communication with the second device, correspondingly, the communication may be unicast-based communication, multicast-based communication, or broadcast-based communication. This is not limited in this application.

For example, the signal quality may include any one or more of reference signal received power (reference signal received power, RSRP), reference signal received quality (reference signal received quality, RSRQ), and a received signal strength indication (received signal strength indication, RSSI), and a signal to interference plus noise ratio (signal to interference plus noise ratio, SINR). The SINR is a ratio of strength of a received wanted signal to strength of a received interfering signal (noise and interference). Optionally, the signal quality may be physical layer quality, for example, physical layer RSRP (for example, L1-RSRP), physical layer RSRQ (for example, L1-RSRQ), a physical layer RSSI (for example, L1-RSSI), and a physical layer SINR (for example, L1-SINR).

For example, the first information is used to indicate the second device to feed back HARQ information for the first data based on the distance between the first device and the second device, indicate the second device to feed back HARQ information for the first data based on the signal quality corresponding to the first data, indicate the second device to feed back HARQ information for the first data based on the distance between the first device and the second device and the signal quality corresponding to the first data, indicate the second device to feed back HARQ information for the first data based on the distance between the first device and the second device and feed back HARQ information for the first data based on the signal quality corresponding to the first data, or indicate the second device not to feed back HARQ information for the first data.

In an implementation, that a first device obtains first indication information may include: The first device obtains first configuration information, where the first configuration information is used to indicate the first indication information. The first configuration information may be configuration information sent by a base station. It may be understood that, in this implementation, the base station may configure a feedback manner of the second device, and send the configuration to the first device. The first device may determine a specific feedback manner based on the configuration of the base station. Optionally, the first configuration information may be indicated by a third device to the first device by using signaling, and the third device may be a device that performs sidelink communication. Optionally, the first configuration information may be preconfigured.

Optionally, the first device may receive the first configuration information configured by the base station. The first configuration information may include feeding back HARQ information for the first data based on the distance information, and/or feeding back HARQ information for the first data based on the information about the signal quality. The first device determines the first indication information based on the first configuration information configured by the base station. For example, when location information of the first device is lost or invalid or signal quality-based feedback is preferentially performed, the first device may determine that the first information in the first indication information is used to indicate the second device to feed back HARQ information for the first data based on the information about the signal quality.

For example, the first configuration information may be indicated by the base station by using instructions (for example, system information blocks (system information blocks, SIB) or RRC signaling), or may be indicated by another terminal device that performs sidelink communication (for example, indicated by using RRC signaling or a medium access control (medium access control, MAC) message). This is not limited in this embodiment of this application. Optionally, the MAC message may be an indication such as a MAC control element (control element, CE). Optionally, when the first configuration information is carried in the RRC signaling, the RRC signaling may be UE-common RRC signaling. Optionally, when the first configuration information may be carried in a message sent by the third device, the first configuration information may be indicated by using sidelink RRC signaling of UE.

In another implementation, that a first device obtains first indication information may include: The first device obtains channel quality information, and the first device determines the first indication information based on the channel quality information.

For example, the channel quality information may be a channel congestion degree. The first device may determine the first indication information by receiving a channel congestion degree sent by a base station. For example, when a channel is relatively congested, it may be determined that the first information is used to indicate the second device not to feed back HARQ information for the first data. Alternatively, when the channel is not congested, it may be determined that the first information is used to indicate the second device to feed back HARQ information for the first data. Alternatively, when the channel is congested, it may be determined that the first information is used to indicate the second device to feed back HARQ information based on the distance between the first device and the second device, or indicate the second device not to feed back HARQ information for the first data. Alternatively, when the channel is not congested, it may be determined that the first information is used to indicate the second device to feed back HARQ information based on the signal quality corresponding to the first data. A specific rule used by the first device to determine the first indication information based on the channel quality information is not limited in this embodiment of this application, and descriptions are provided herein by way of example only.

In still another implementation, that a first device obtains first indication information may include: The first device obtains a location of the first device; and if the first device cannot obtain the location of the first device, the first device determines that the first indication information is used to indicate the second device to feed back HARQ information for the first data based on the signal quality corresponding to the first data, or indicate the second device not to feed back HARQ information for the first data; or if the first device obtains the location of the first device, the first device determines that the first indication information is used to indicate the second device to feed back HARQ information for the first data based on the distance between the first device and the second device, or indicate the second device to feed back HARQ information for the first data based on the distance between the first device and the second device and feed back HARQ information for the first data based on the signal quality corresponding to the first data.

For example, the location of the first device may be a geographical location of the first device. The geographical location of the first device may be location coordinates obtained based on a satellite, for example, may be global positioning system (Global Positioning System, GPS) coordinates or BeiDou location coordinates. Alternatively, the location of the first device may be location information obtained based on another positioning system or positioning technology, for example, location information obtained based on inertial navigation, location information obtained based on radar, or location information obtained based on a positioning signal between a network device and UE. This is not limited in this embodiment of this application. It may be understood that a reason why the first device cannot obtain the location of the first device may be that a current location of the first device is not covered by a network, a network signal is relatively weak, or the like. This is not limited in this embodiment of this application.

It should be noted that a specific manner in which the first device obtains the first indication information is not limited in this embodiment of this application, and descriptions are provided herein by way of example only. For example, the first device may further obtain and determine the first indication information depending on a feedback of whether resources are sufficient, whether congestion occurs, or the like.

For example, a HARQ information feedback manner includes: sending an acknowledgment (acknowledgement, ACK) without sending a negative acknowledgment (negative acknowledgement, NACK), where for example, an ACK is sent when a decoding result of demodulating the first data by the receiver is correct, and neither the ACK nor the NACK is sent when the decoding result of demodulating the first data by the receiver is incorrect; sending a negative acknowledgment (NACK) without sending an ACK, where for example, an ACK is not sent when a decoding result of demodulating the first data by the receiver is correct, and a NACK is sent when the decoding result of demodulating the first data by the receiver is incorrect; or sending an ACK or a NACK, where for example, an ACK is sent when a decoding result of demodulating the first data by the receiver is correct, and a NACK is sent when the decoding result of demodulating the first data by the receiver is incorrect. That is, feeding back HARQ information includes sending only an ACK, sending only a NACK, or sending an ACK or a NACK.

It should be noted that, in this embodiment of this application, unless otherwise specified, when the second device sends an ACK, it is implied or included that the decoding result of demodulating the first data by the second device is correct; when the second device sends a NACK, it is implied or included that the decoding result of demodulating the first data by the second device is incorrect.

Optionally, the HARQ information feedback manner may be configured or preconfigured by the network device (for example, a base station device). The network device may indicate, by using signaling, a specific HARQ feedback manner. The first device and/or the second device may perform feedback according to the specific HARQ feedback manner configured by the base station.

It may be understood that, in this embodiment of this application, the first device may determine a plurality of feedback manners of the second device, and send the first indication information to the second device by using signaling, so that the second device can switch among the plurality of feedback manners. The method is applicable to more scenarios, and can improve reliability of communication between the transmitter and the receiver.

S302. The first device sends the first indication information and the first data to the second device.

For example, the first device may send the first indication information and the first data in a multicast, unicast, or broadcast manner. For example, the first device may send the first indication information and the first data to one second device (in a unicast scenario), or the first device may send the first indication information and the first data to a plurality of second devices (in a multicast scenario). Alternatively, the first device may send the first indication information and the first data to an unlimited quantity of second devices (in a broadcast scenario). Optionally, when the first device sends the first indication information and the first data to a plurality of second devices, the second devices may be receivers clear to the first device, or may be receivers unknown by or unclear to the first device. This is not limited in this embodiment of this application.

For example, when the first device sends the first indication information and the first data, the first indication information and the first data may be sent at the same time, or may be sent at different time points. This is not limited in this embodiment of this application. Optionally, the first data may be sent in a slot in which the first device sends the first indication information. Optionally, the first data may be sent in a slot before or after a slot in which the first device sends the first indication information. Optionally, the first indication information may be information used to indicate a transmission parameter of the first data. Optionally, one or more pieces of first data may share one piece of first indication information.

Optionally, when the first device sends the first indication information, the first indication information may be carried in sidelink control information (sidelink control information, SCI). For example, the first device may send the SCI in a slot for sending the first data.

Optionally, in the SCI, a 2-, 3-, or 4-bit field may be used to indicate the first information. A specific quantity of bits of the first information is not limited in this embodiment of this application.

For example, when the first information is used to indicate the second device to feed back HARQ information for the first data based on the distance information, and/or indicate the second device to feed back HARQ information for the first data based on the information about the signal quality, the first information may be represented by using a first field in the SCI, and different values of the first field may indicate the second device to feed back HARQ information for the first data based on the distance information, and/or indicate the second device to feed back HARQ information for the first data based on the information about the signal quality.

Optionally, when the first information is further used to indicate the second device not to feed back HARQ information for the first data, the different values of the first field may be used to indicate the foregoing different feedback manners. For example, the first field contains 2 bits. When a value of the first field is 0 (corresponding to binary 00), the first information is used to indicate the second device to feed back HARQ information for the first data based on the distance information. When the value of the first field is 1 (corresponding to binary 01), the first information is used to indicate the second device to feed back HARQ information for the first data based on the information about the signal quality. When the value of the first field is 2 (corresponding to binary 10), the first information is used to indicate the second device to feed back HARQ information for the first data based on the distance information, and to feed back HARQ information for the first data based on the information about the signal quality. When the value of the first field is 3 (corresponding to binary 11), the first information is used to indicate the second device not to feed back HARQ information for the first data. A quantity of bits of occupied by the first field in the SCI is not limited in this embodiment of this application, and descriptions are provided herein by way of example only.

For example, the first indication information may further include second information, and the second information is used to indicate that the first information takes effect. For example, the second information may be represented by using 1 bit in the SCI. When a value of the 1-bit field is 1, it indicates that the first information takes effect, that is, the first information is used to indicate the second device to feed back HARQ information for the first data based on the distance information and/or the information about the signal quality. When the value of the 1-bit field is 0, it indicates that the first information does not take effect. For example, the first information may indicate the second device not to feed back HARQ information for the first data. For example, alternatively, 0 may be used to indicate that the first information takes effect, and 1 may indicate that the first information does not take effect. This is not limited in the present invention. For example, if the bit sets 0, it indicates that the first information is carried. If the bit sets 1, it indicates that the first information is not carried, and may indicate that the second device is indicated not to feed back HARQ information for the first data.

Optionally, when the second information indicates that the first information does not take effect, the second information and the first information may share different values of one field. For example, if the first field contains 4 bits, when a value of the four bits is 0000 or 1111, it may indicate that the first information does not take effect, and another value of the four bits may be used to indicate the first information. For example, 0001 may indicate the second device to feed back HARQ information for the first data based on the signal quality.

For example, the first indication information may further include third information. The third information is used to indicate one or more of a quantity of transmissions of the first data, information indicating a time domain relationship between a plurality of transmissions of the first data, and information indicating a frequency domain relationship between the plurality of transmissions of the first data. The quantity of transmissions of the first data may also be referred to as a quantity of repetitions (repetitions) of the first data. Optionally, for example, when the first data is transmitted with no HARQ feedback, the quantity N of transmissions of the first data may be one or more of 1, 2, 4, and 8. Optionally, the third information may indicate the quantity N of transmissions of the first data. Optionally, for the N transmissions of the first data, indication information of a time domain interval between two or more adjacent transmissions of the first data may be indicated by using the third information. Optionally, for the N transmissions of the first data, indication information of a frequency domain resource interval between two or more adjacent transmissions of the first data may be indicated by using the third information. Optionally, when the N transmissions of the first data are performed in a time domain frequency hopping and/or a frequency domain frequency hopping manner, the third information is further used to indicate a frequency hopping parameter.

For example, the third information may be indicated by using the SCI, some or all bits of the third information may be carried by using the SCI, or the third information may be indicated by using MAC signaling, RRC signaling, or preconfigured signaling. Optionally, some bits of the third information may be carried by using the SCI, and the other bits may be carried by using MAC signaling, RRC signaling, or preconfigured signaling.

For example, the first indication information may further include fourth information, and the fourth information is used to indicate the location of the first device. For example, the fourth information may indicate an identifier of a first area in which the first device is located, or indicate location coordinates (for example, GPS coordinates) of the first device. A specific form of the location of the first device is not limited in this embodiment of this application, and descriptions are provided herein by way of example only.

Optionally, the fourth information is further used to indicate a minimum communication distance corresponding to the first data. The minimum communication distance may also be referred to as a required minimum communication distance or a required minimum distance, and is a minimum distance required to achieve a specific transmission latency, specific transmission reliability, or a specific transmission rate. Optionally, when a distance between the receiver and the transmitter (which may be referred to as a transceiver) is less than or equal to the minimum communication distance, communication between the receiver and the transmitter needs to meet requirements on the transmission latency, reliability, rate, and the like. When the distance between the receiver and the transmitter is greater than or equal to the required minimum distance, the communication between the receiver and the transmitter does not need to meet the requirements on the transmission latency, reliability, rate, and the like. The second device may compare the distance between the second device and the first device with the minimum communication distance, to determine whether to feed back HARQ information for the first data. For example, when the distance between the second device and the first device is less than or equal to the minimum communication distance, the second device determines, based on a receiving status of the first data, to feed back HARQ information. Otherwise, the second device does not feed back HARQ information.

For example, the fourth information may be indicated by using the SCI, some or all bits of the fourth information may be carried by using the SCI, or the fourth information may be indicated by using MAC signaling, RRC signaling, or preconfigured signaling. Optionally, some bits of the fourth information may be carried by using the SCI, and the other bits may be carried by using MAC signaling, RRC signaling, or preconfigured signaling.

Optionally, when the fourth information is used to indicate both the location of the first device and the minimum communication distance corresponding to the first data, a joint field or two or more different fields may be used for indication. This is not limited in this embodiment of this application.

For example, the first indication information may further include fifth information, and the fifth information is used to indicate a signal quality threshold corresponding to the first data. Optionally, when the signal quality corresponding to the first data is greater than or equal to the signal quality threshold, communication reliability between the receiver and the transmitter is relatively high. When the signal quality corresponding to the first data is less than or equal to the signal quality threshold, communication reliability between the receiver and the transmitter is relatively low. The signal quality corresponding to the first data may be signal quality that is of the first data and that is sent by the first device and received by the second device, may be signal quality that is of the first indication information and that is sent by the first device and received by the second device, may be signal quality of a reference signal sent in a slot for sending the first data, may be signal quality of a signal existing in a period of time before the first device sends the first data, or may be a channel congestion degree. This is not limited in this embodiment of this application, and descriptions are provided herein by way of example only. The second device may compare the signal quality received from the first device with the signal quality threshold, to determine whether to feed back HARQ information for the first data. For example, when the received signal quality is greater than or equal to the signal quality threshold, the second device determines, based on a receiving status of the first data, to feed back HARQ information. Otherwise, the second device does not feed back HARQ information.

Optionally, the signal quality threshold corresponding to the first data may be a signal quality threshold that corresponds to a quality of service parameter of the first data and that is determined by the first device based on a correspondence, configured by the network device, between a quality of service parameter and a signal quality threshold. Optionally, the signal quality threshold corresponding to the first data may alternatively be a signal quality threshold that is configured by the network device for the first device and that is determined based on the location of the first device, a channel congestion degree, a service load status, or the like. Optionally, the signal quality threshold corresponding to the first data may alternatively be a signal quality threshold that corresponds to a power parameter of the first data and that is determined by the first device based on a correspondence, configured by the network device, between a power parameter and a signal quality threshold. Optionally, the signal quality threshold corresponding to the first data may alternatively be a signal quality threshold that is determined by the first device based on the location of the first device, a channel congestion degree, a service load status, or the like. For example, the location of the first device may be geographical location coordinates of the first device, or may be the identifier of the first area in which the first device is located. This is not limited in this embodiment of this application.

For example, the fifth information may be indicated by using the SCI, some or all bits of the fifth information may be carried by using the SCI, or the fifth information may be indicated by using MAC signaling, RRC signaling, or preconfigured signaling. Optionally, some bits of the fifth information may be carried by using the SCI, and the other bits may be carried by using MAC signaling, RRC signaling, or preconfigured signaling.

Optionally, the first indication information may further include a second field, and different values of the second field are used to indicate the fourth information or the fifth information. For example, in the SCI, the second field contains 4 bits. When a value of the second field ranges from 0 to 10 (corresponding to binary 0000 to 1010), it indicates that the second field indicates the fourth information. When the value of the second field ranges from 11 to 15 (corresponding to binary 1011 to 1111), it indicates that the second field indicates the fifth information. It may be understood that the second field in the SCI may be reused for the fourth information and the fifth information. When the values of the second field are different, information indicated by the second field is different.

Optionally, the first indication information may further include a third field, and different values of the third field are used to indicate the third information, the fourth information, or the fifth information. A quantity of bits of the third field may be the same as or different from the quantity of bits of the second field. This is not limited in this embodiment of this application. For example, in the SCI, the third field contains 4 bits. When a value of the third field ranges from 0 to 4 (corresponding to binary 0000 to 0100), it indicates that the third field indicates the third information. When the value of the third field ranges from 5 to 10 (corresponding to binary 0101 to 1010), it indicates that the third field indicates the fourth information. When the value of the third field ranges from 11 to 15 (corresponding to binary 1011 to 1111), it indicates that the third field indicates the fifth information. It may be understood that the third field in SCI may be reused for the third information, the fourth information, and the fifth information. When the values of the third field are different, information indicated by the third field is different.

Optionally, the first indication information may further include eighth information, and the eighth information is used to indicate that information indicated by a fourth field in the SCI is the third information, the fourth information, or the fifth information. For example, in the SCI, the eighth information occupies two bits, and the fourth field contains 4 bits. When a value of the eighth information is 0 (corresponding to binary 00), the fourth field indicates the third information. When the value of the eighth information is 1 (corresponding to binary 01), the fourth field indicates the fourth information. When the value of the eighth information is 2 (corresponding to binary 10), the fourth field indicates the fifth information. It may be understood that, different from the foregoing implementation, in this implementation, a single field may be used to indicate the information indicated by the fourth field.

Optionally, the eighth information may be the first information.

It may be understood that when the first information is used to indicate the second device not to feed back HARQ information for the first data, the fourth field may indicate the third information. When the first information is used to indicate the second device to feed back HARQ information for the first data based on the distance information, the fourth field may indicate the fourth information. When the first information is used to indicate the second device to feed back HARQ information for the first data based on the information about the signal quality, the fourth field may indicate the fifth information. That is, when the second device has different feedback manners, meanings represented by the fourth field are different, and the third field may be reused for the third information, the fourth information, and the fifth information.

It should be noted that quantities of bits of the first field, the second field, the third field, and the fourth field are not limited in this embodiment of this application, and descriptions are provided herein by way of example only.

For example, the first indication information may further include sixth information, and the sixth information is used to indicate a power parameter used by the first device to send the first data. For example, the power parameter used by the first device to send the first data may include a change value of a transmit power used when the first device sends the first data, a value of the transmit power used when the first device sends the first data, or a margin value of the transmit power used when the first device sends the first data. Optionally, the change value of the transmit power is a change of the transmit power used when the first data is sent relative to a previous transmit power or a transmit power of a previous K^{th} transmission, where K is a positive integer. Optionally, the margin value of the transmit power used when the first device sends the first data is a difference between the transmit power used when the first device sends the first data and a maximum transmit power.

For example, the sixth information may be indicated by using the SCI, some or all bits of the sixth information may be carried by using the SCI, or the sixth information may be indicated by using MAC signaling, RRC signaling, or preconfigured signaling. Optionally, some bits of the sixth information may be carried by using the SCI, and the other bits may be carried by using MAC signaling, RRC signaling, or preconfigured signaling.

Optionally, when the first indication information does not include the fifth information but includes the sixth information, the different values of the second field are used to indicate the fourth information or the sixth information. For example, in the SCI, the second field contains 4 bits. When a value of the second field ranges from 0 to 10 (corresponding to binary 0000 to 1010), it indicates that the second field indicates the fourth information. When the value of the second field ranges from 11 to 15 (corresponding to binary 1011 to 1111), it indicates that the second field indicates the sixth information. It may be understood that the second field in the SCI may be reused for the fourth information and the sixth information. When the values of the second field are different, information indicated by the second field is different.

Optionally, when the first indication information does not include the fifth information but includes the sixth information, the different values of the third field are used to indicate the third information, the fourth information, or the sixth information. A quantity of bits of the third field may be the same as or different from the quantity of bits of the second field. This is not limited in this embodiment of this application. For example, in the SCI, the third field contains 4 bits. When a value of the third field ranges from 0 to 4 (corresponding to binary 0000 to 0100), it indicates that the third field indicates the third information. When the value of the third field ranges from 5 to 10 (corresponding to binary 0101 to 1010), it indicates that the third field indicates the fourth information. When the value of the third field ranges from 11 to 15 (corresponding to binary 1011 to 1111), it indicates that the third field indicates the sixth information. It may be understood that the third field in SCI may be reused for the third information, the fourth information, and the sixth information. When the values of the third field are different, information indicated by the third field is different.

Optionally, the first indication information may further include ninth information, and the ninth information is used to indicate that information indicated by a fourth field in the SCI is the third information, the fourth information, or the sixth information. For example, in the SCI, the ninth information occupies two bits, and the fourth field contains 4 bits. When a value of the ninth information is 0 (corresponding to binary 00), the fourth field indicates the third information. When the value of the ninth information is 1 (corresponding to binary 01), the fourth field indicates the fourth information. When the value of the ninth information is 2 (corresponding to binary 10), the fourth field indicates the sixth information. It may be understood that, different from the foregoing implementation, in this implementation, a single field may be used to indicate the information indicated by the fourth field.

Optionally, the ninth information may be the first information.

It may be understood that when the first information is used to indicate the second device not to feed back HARQ information for the first data, the fourth field may indicate the third information. When the first information is used to indicate the second device to feed back HARQ information for the first data based on the distance information, the fourth field may indicate the fourth information. When the first information is used to indicate the second device to feed back HARQ information for the first data based on the information about the signal quality, the fourth field may indicate the sixth information. That is, when the second device has different feedback manners, meanings represented by the fourth field are different, and the third field may be reused for the third information, the fourth information, and the sixth information.

For example, the first indication information may further include seventh information, where the seventh information is used to indicate the quality of service parameter of the first data. The quality of service (quality of service, QoS) parameter includes one or more sub-parameters, for example, sub-parameter 1 to 4, which are priority information, latency information, reliability information, and a size of a data packet.

For example, the seventh information may be indicated by using the SCI, some or all bits of the seventh information may be carried by using the SCI, or the seventh information may be indicated by using MAC signaling, RRC signaling, or preconfigured signaling. Optionally, some bits of the seventh information may be carried by using the SCI, and the other bits may be carried by using MAC signaling, RRC signaling, or preconfigured signaling.

Optionally, the priority information is used to indicate or determine a priority of a data packet, and a higher priority indicates that a data packet corresponding to the priority is more important or more urgent.

Optionally, the latency information is a maximum latency required during transmission of the data packet. Optionally, for example, some data packets are required to arrive at a receiver within 3 ms, some data packets are required to arrive at a receiver within 10 ms, and some data packets are required to arrive at a receiver within 50 ms.

Optionally, a smaller maximum end-to-end latency indicated by the latency information indicates that a to-be-sent data packet is more urgent or needs to be sent, received, and processed more quickly.

Optionally, the reliability information indicates a reliability requirement of the data packet. Optionally, if the reliability requirement is higher, for example, reliability is required to reach 99.99%, more mechanisms are required during transmission to ensure correct receiving of the data packet, for example, a feedback from a physical layer is required, or more retransmissions are required. If the reliability requirement is lower, for example, reliability is required to reach 90%, a feedback may not be required during transmission, and a quantity of retransmissions may not need to be very large.

Optionally, the data packet size may alternatively be a required transmission rate. Optionally, a larger value of the packet size indicates a larger size of a packet to be transmitted or a larger amount of information to be transmitted. Otherwise, a smaller value of the packet size indicates a smaller size of a packet to be transmitted or a smaller amount of information to be transmitted.

In an implementation, before step S301, the method may further include: The first device obtains second configuration information, where the second configuration information includes one or more groups of quality of service parameters, and one or more signal quality thresholds corresponding to each group of quality of service parameters. The one or more groups of quality of service parameters include the quality of service parameter of the first data. In other words, the first device may determine, based on the second configuration information, the signal quality threshold corresponding to the quality of service parameter of the first data.

For example, one group of quality of service parameters may correspond to one row in Table 1. Similarly, a plurality of groups of quality of service parameters may correspond to a plurality of rows in Table 1. As shown in Table 1, different services correspond to different quality of service parameters, that is, the corresponding quality of service parameters are different in terms of at least one sub-parameter in one or more sub-parameters included in each of the quality of service parameters. Even services of a same type may correspond to different quality of service parameters, that is, the corresponding quality of service parameters are different in terms of at least one sub-parameter in one or more sub-parameters included in each of the quality of service parameters. For example, services with a same latency requirement may have different priorities. Alternatively, quality of service parameters corresponding to services of a same priority may include one or more other sub-parameters that are the same or different.

**Table 1**

| Service type | Maximum end-to-end latency (ms) | Reliability (%) | Priority | Transmission rate (Mbps) |
|---|---|---|---|---|
| Vehicle platoon | 10 | 99.99 | P1 | N.A. |
| | 20 | N.A. | P3 | N.A. |
| | 20 | | P4 | 50 |
| Autonomous driving | 3 | 99.999 | P2 | 30 |
| | 100 | N.A. | P0 | 10 |
| | 100 | N.A. | P2 | 50 |
| Extended sensor | 3 | 99.999 | P0 | 50 |
| | 10 | 99.99 | P3 | 25 |
| | 50 | 99 | P6 | 10 |
| | 10 | 99.99 | P3 | 1000 |
| | 50 | 90 | P4 | 10 |
| | 10 | 99.99 | P5 | 700 |
| | 10 | 99.99 | P7 | 90 |

For example, one group of quality of service parameters in the second configuration information may correspond to a plurality of signal quality thresholds, and signal quality thresholds corresponding to different quality of service parameters may be the same or different. This is not limited in this embodiment of this application.

For example, the second configuration information obtained by the first device may be received second configuration information sent by the network device. The second configuration information may be indicated by the base station by using instructions (for example, system information blocks (SIBs) or RRC signaling), or may be indicated by another terminal device that performs sidelink communication (for example, indicated by using RRC signaling or MAC signaling). This is not limited in this embodiment of this application.

For example, a correspondence that is between quality of service parameters and signal quality thresholds and that is in the second configuration information may be configured by using explicit signaling, or may be stored in a database in a form of a table. The database may be stored in a software form in the memory 202 shown in FIG. 2, or may be solidified in a hardware form in the processor 201 or another component of the communication device 200 (the first device). This is not limited in this application. It may be understood that the correspondence between quality of service parameters and signal quality thresholds in this embodiment of this application may alternatively be determined in another manner, for example, through presetting or pre-definition.

For example, the quality of service parameter includes priority information. The correspondence between quality of service parameters and signal quality thresholds may be shown in the following Table 2A.

**Table 2A**

| Priority information | Signal quality threshold |
|---|---|
| 0 | R0 |
| 1 | R1 |
| 2 | R2 |
| 3 | R3 |
| 4 | R4 |
| 5 | R5 |
| 6 | R6 |
| 7 | R7 |

For example, the quality of service parameter includes priority information and latency information. The correspondence between quality of service parameters and signal quality thresholds may be shown in the following Table 2B.

**Table 2B**

| Priority information | Maximum end-to-end latency (ms) | Signal quality threshold |
|---|---|---|
| 0 | 10 | R0 |
| 1 | 20 | R1 |
| 2 | 20 | R3 |
| 3 | 20 | R2 and R4 |
| 4 | 50 | R5 |
| 5 | 50 | R3 and R6 |
| 6 | 100 | R7 |
| 7 | 100 | R8 |

If the quality of service parameter includes priority information and latency information, for example, the priority information is a priority 3, and the maximum end-to-end latency is 20 ms, it can be learned from Table 2B that signal quality thresholds corresponding to the quality of service parameter include R2 and R4.

For example, if one group of quality of service parameters includes a plurality of sub-parameters, the second configuration information may include a plurality of sub-parameters and a signal quality threshold corresponding to each sub-parameter. For example, the quality of service parameter includes priority information and latency information. The correspondence between quality of service parameters and signal quality thresholds may be shown in Table 2A and Table 2C.

**Table 2C**

| Maximum end-to-end latency (ms) | Signal quality threshold |
|---|---|
| 10 | R0 and R1 |
| 20 | R1 |
| 20 | R2 and R3 |
| 20 | R2 and R4 |
| 50 | R5 |
| 50 | R6 |
| 100 | R7 |
| 100 | R8 |

If the quality of service parameter includes priority information and latency information, for example, the priority information is a priority 3 and the maximum end-to-end latency is 20 ms, it can be learned from Table 2A that a signal quality threshold corresponding to the priority 3 is R3, and it can be learned from Table 2C that signal quality thresholds corresponding to the maximum end-to-end latency of 20 ms include R2 and R4.

It may be understood that the correspondence between quality of service parameters and signal quality thresholds may be indicated by using a table, or may be indicated in another manner (for example, by using configured signaling). When the correspondence is indicated by using a table, one or more tables may be used for indication. This is not limited in this embodiment of this application.

Optionally, in this implementation, the first device may further determine, based on the quality of service parameter of the first data and the second configuration information, a first signal quality threshold corresponding to the quality of service parameter of the first data, where the first signal quality threshold is one of the one or more signal quality thresholds. The first signal quality threshold is the signal quality threshold corresponding to the first data.

For example, with reference to Table 2B, one group of quality of service parameters may correspond to one or more signal quality thresholds. If the quality of service parameter of the first data corresponds to a plurality of signal quality thresholds, a minimum value, a middle value, a maximum value, an average value, or a minimum region of the signal quality thresholds corresponding to the quality of service parameter of the first data may be determined as the first signal quality threshold. This is not limited in this embodiment of this application, and descriptions are provided herein by way of example only.

In another implementation, before step S301, the method may further include: The first device obtains third configuration information, where the third configuration information includes one or more power parameters, and one or more signal quality thresholds corresponding to each power parameter. The one or more power parameters include the power parameter used by the first device to send the first data. In other words, the first device may determine, based on the third configuration information, the signal quality threshold corresponding to the power parameter used by the first device to send the first data.

For example, the third configuration information obtained by the first device may be received third configuration information sent by the network device. The third configuration information may be indicated by the base station by using instructions (for example, system information blocks (SIBs) or RRC signaling), or may be indicated by another terminal device that performs sidelink communication (for example, indicated by using RRC signaling or MAC signaling). This is not limited in this embodiment of this application.

For example, the power parameter used by the first device to send the first data is a transmit power. A correspondence between the transmit power and the signal quality threshold may be shown in the following Table 3.

**Table 3**

| Transmit power | Signal quality threshold |
|---|---|
| P0 | R0 |
| P1 | R1 |
| P2 | R2 and R2 |
| P3 | R3 |
| P4 | R4 and R1 |
| P5 | R5 |
| P6 | R6 |
| P7 | R7 |

For example, in this implementation, the first device may further determine, based on the power parameter used by the first device to send the first data and the third configuration information, a second signal quality threshold corresponding to the power parameter used by the first device to send the first data. The second signal quality threshold is one of the one or more signal quality thresholds, and the second signal quality threshold is the signal quality threshold corresponding to the first data.

For example, the power parameter used by the first device to send the first data may correspond to one or more signal quality thresholds. If the power parameter used by the first device to send the first data corresponds to a plurality of signal quality thresholds, a minimum value, a middle value, a maximum value, an average value, or a minimum region of the signal quality thresholds corresponding to the power parameter used by the first device to send the first data may be determined as the first signal quality threshold. This is not limited in this embodiment of this application, and descriptions are provided herein by way of example only.

In still another implementation, before step S301, the method may further include: The first device determines, based on the location of the first device, the channel congestion degree, the service load status, and the like, the signal quality threshold corresponding to the first data. The location of the first device may be the geographical location coordinates of the first device, the identifier of the first area in which the first device is located, an area to which the location of the first device belongs, or the like. This is not limited in this embodiment of this application. Optionally, when the first device is located in different locations such as in a city, on a highway, in a mountainous area, or in a suburb, and/or when the channel congestion degree is different, and/or when the service density degree is different, the first data may correspond to different signal quality thresholds.

In this implementation, the first device may further receive signal quality thresholds that are sent by the network device (for example, the base station device) and that correspond to different geographical locations, channel congestion degrees, and service load statuses, and determine, based on configuration of the base station, the signal quality threshold corresponding to the first data.

Optionally, the first device may further receive a signal quality threshold configured by the network device for the first device based on the location of the first device, the channel congestion degree, the service load status, and the like.

S303. The second device obtains the first indication information.

For example, that the second device obtains the first indication information may include: The second device receives the first indication information sent by the first device.

Optionally, the second device may further receive fourth configuration information sent by the network device (for example, the base station device), and determine the feedback manner of the second device based on the fourth configuration information sent by the network device and the first indication information sent by the first device. The fourth configuration information may indicate the second device to feed back HARQ information of the first data to the first device, or not to feed back HARQ information of the first data to the first device.

Optionally, the fourth configuration information may alternatively indicate the second device to feed back HARQ information to the first device based on the distance information and/or the information about the signal quality. The second device feeds back HARQ information of the first data to the first device based on the fourth configuration information.

Optionally, the second device may determine a specific feedback manner of the second device based on the fourth configuration information configured by the base station. For example, if the fourth configuration information indicates the second device to feed back HARQ information to the first device based on the distance information and/or the information about the signal quality, when location information of the second device is lost or invalid, the second device may feed back HARQ information for the first data to the first device based on the information about the signal quality.

Optionally, the fourth configuration information may be indicated by the base station by using instructions (for example, system information blocks (SIBs) or RRC signaling), or may be indicated by another terminal device that performs sidelink communication (for example, indicated by using RRC signaling or MAC signaling). This is not limited in this embodiment of this application.

S304. The second device receives the first data sent by the first device.

For example, a moment at which the second device receives the first data sent by the first device may be the same as or different from a moment at which the second device receives the first indication information sent by the first device. This is not limited in this embodiment of this application.

S305. The second device feeds back HARQ information for the first data to the first device based on the first indication information.

For example, that the second device feeds back HARQ information for the first data to the first device based on the first indication information may include a plurality of cases. For example, when the first device determines to indicate the second device to feed back HARQ information based on the distance information, if the second device obtains a location of the second device, the second device may feed back HARQ information for the first data to the first device based on the distance between the first device and the second device. If the second device cannot obtain the location of the second device, the second device may feed back HARQ information for the first data to the first device based on the signal quality (for example, the signal quality corresponding to the first data) of the signal sent by the first device. For another example, when the first device determines to indicate the second device to feed back HARQ information based on the distance information and to feed back HARQ information based on the information about the signal quality, if the second device obtains a location of the second device, the second device may feed back HARQ information for the first data to the first device based on the distance between the first device and the second device, or the second device may feed back HARQ information for the first data to the first device based on the distance between the first device and the second device and the signal quality corresponding to the first data. If the second device cannot obtain the location of the second device, the second device may feed back HARQ information for the first data to the first device based on the signal quality corresponding to the first data. A specific scenario in which the second device feeds back HARQ information for the first data to the first device based on the first indication information is not limited in this embodiment of this application, and descriptions are provided herein by way of example only. Optionally, that the second device may feed back HARQ information for the first data to the first device based on the signal quality corresponding to the received first data includes: The second device detects the signal sent by the first device, and then compares the signal quality of the detected signal with a configured signal quality threshold. If the signal quality is greater than or equal to the configured signal quality threshold, the second device feeds back HARQ information. Otherwise, the second device does not feed back HARQ information.

The following describes in detail a specific method used by the second device to feed back HARQ information for the first data to the first device based on the first indication information.

In an implementation, when the first information is used to indicate the second device to feed back HARQ information for the first data based on the distance information, that the second device feeds back HARQ information for the first data to the first device based on the first indication information includes: The second device determines the distance between the first device and the second device based on the fourth information, and feeds back HARQ information based on the distance between the first device and the second device. The fourth information is used to indicate the location of the first device and the minimum communication distance. It may be understood that a specific implementation in which the second device determines the distance between the first device and the second device based on the fourth information is not limited in this embodiment of this application. For details, refer to a method in the conventional technology.

For example, when feeding back HARQ information includes sending an ACK without sending a NACK (sending only the ACK), that the second device feeds back HARQ information based on the distance between the first device and the second device includes: If the distance between the first device and the second device is less than the minimum communication distance, the second device sends an ACK feedback to the first device; or if the distance between the first device and the second device is greater than or equal to the minimum communication distance, the second device does not send a feedback.

For example, when feeding back HARQ information includes sending a NACK without sending an ACK (sending only the NACK), that the second device feeds back HARQ information based on the distance between the first device and the second device includes: If the distance between the first device and the second device is less than the minimum communication distance, the second device does not send a feedback; or if the distance between the first device and the second device is greater than or equal to the minimum communication distance, the second device sends a NACK feedback to the first device.

For example, when feeding back HARQ information includes sending an ACK or a NACK, that the second device feeds back HARQ information based on the distance between the first device and the second device includes: If the distance between the first device and the second device is less than the minimum communication distance, the second device sends an ACK feedback to the first device; or if the distance between the first device and the second device is greater than or equal to the minimum communication distance, the second device sends a NACK feedback to the first device.

This implementation may be applied to a scenario in which both the location information of the first device and the location information of the second device are not lost, or a scenario in which distance-based feedback may be preferentially performed. For example, after obtaining the location of the first device, the first device indicates the second device to feed back HARQ information for the first data to the first device based on the distance information. After obtaining the location of the second device, the second device determines the distance between the first device and the second device, and feeds back HARQ information for the first data to the first device based on the distance and the minimum communication distance. An application scenario of this implementation is not limited in this embodiment of this application, and descriptions are provided herein by way of example only.

In another implementation, when the first information is used to indicate the second device to feed back HARQ information for the first data based on the distance information, that the second device feeds back HARQ information for the first data to the first device based on the first indication information includes: obtaining the signal quality corresponding to the first data and the signal quality threshold corresponding to the first data; and feeding back HARQ information for the first data to the first device based on the signal quality corresponding to the first data and the signal quality threshold corresponding to the first data. Optionally, when the location information of the second device is lost or invalid, the second device may feed back HARQ information for the first data to the first device based on the signal quality corresponding to the first data and the signal quality threshold corresponding to the first data.

For example, the signal quality threshold corresponding to the first data may be a signal quality threshold configured by the network device for the second device, may be a signal quality threshold that corresponds to the first data and that is determined by the second device based on the location of the first device, the channel congestion degree, the service load status, or the like, or may be a signal quality threshold that corresponds to the first data and that is determined by the second device based on the seventh information in the first indication information sent by the first device, where the seventh information is used to indicate the quality of service parameter of the first data. Optionally, the quality of service parameter of the first data indicated in the seventh information may be priority information of the first data.

Optionally, when the first device is located in different locations such as in a city, on a highway, in a mountainous area, or in a suburb, and/or when the channel congestion degree is different, and/or when the service density degree is different, the first data may correspond to different signal quality thresholds. Optionally, the second device may further receive signal quality thresholds that are sent by the base station and that correspond to different geographical locations, channel congestion degrees, and service load statuses, and determine, based on the configuration of the base station and the location of the first device, the signal quality threshold corresponding to the first data.

Optionally, before step S304, the method may further include: The second device obtains fifth configuration information, where the fifth configuration information includes one or more groups of quality of service parameters, and one or more signal quality thresholds corresponding to each group of quality of service parameters. The one or more groups of quality of service parameters include the quality of service parameter of the first data. That is, the second device may determine, based on the fifth configuration information, the signal quality threshold corresponding to the quality of service parameter of the first data. It may be understood that, for a manner in which the second device obtains the fifth configuration information and content of the fifth configuration information, refer to the manner in which the first device obtains the second configuration information and the related descriptions of the content of the second configuration information in step S301. Details are not described herein again. It should be noted that the fifth configuration information may be the same as or different from the second configuration information. This is not limited in this embodiment of this application.

For example, that the second device determines, based on the seventh information, the signal quality threshold corresponding to the first data includes: The second device obtains, based on the quality of service parameter of the first data, a third signal quality threshold corresponding to the quality of service parameter of the first data. The third signal quality threshold is one of the one or more signal quality thresholds, and the third signal quality threshold is the signal quality threshold corresponding to the first data.

For example, when feeding back HARQ information includes sending an ACK without sending a NACK (sending only the ACK), that the second device feeds back HARQ information for the first data to the first device based on the signal quality corresponding to the first data and the signal quality threshold corresponding to the first data includes: If the signal quality corresponding to the first data is greater than or equal to the third signal quality threshold (or a signal quality threshold configured by the network device), the second device sends an ACK feedback to the first device; or if the signal quality corresponding to the first data is less than the third signal quality threshold (or the signal quality threshold configured by the network device), the second device does not send a feedback.

For example, when feeding back HARQ information includes sending a NACK without sending an ACK (sending only the NACK), that the second device feeds back HARQ information for the first data to the first device based on the signal quality corresponding to the first data and the signal quality threshold corresponding to the first data includes: If the signal quality corresponding to the first data is greater than or equal to the third signal quality threshold (or a signal quality threshold configured by the network device), the second device does not send a feedback; or if the signal quality corresponding to the first data is less than the third signal quality threshold (or the signal quality threshold configured by the network device), the second device sends a NACK feedback to the first device.

For example, when feeding back HARQ information includes sending an ACK or a NACK, that the second device feeds back HARQ information for the first data to the first device based on the signal quality corresponding to the first data and the signal quality threshold corresponding to the first data includes: If the signal quality corresponding to the first data is greater than or equal to the third signal quality threshold (or a signal quality threshold configured by the network device), the second device sends an ACK feedback to the first device; or if the signal quality corresponding to the first data is less than the third signal quality threshold (or the signal quality threshold configured by the network device), the second device sends a NACK feedback to the first device.

This implementation may be applied to a scenario in which the location information of the first device is not lost but the location information of the second device is lost, or a scenario in which signal quality may be preferentially used. For example, after obtaining the location of the first device, the first device indicates the second device to feed back HARQ information for the first data to the first device based on the distance information. Because the second device cannot obtain the location of the second device (the location information of the second device is lost), the second device feeds back HARQ information for the first data to the first device based on the signal quality corresponding to the first data and the signal quality threshold corresponding to the first data. An application scenario of this implementation is not limited in this embodiment of this application, and descriptions are provided herein by way of example only.

In still another implementation, when the first information is used to indicate the second device to feed back HARQ information for the first data based on the information about the signal quality, that the second device feeds back HARQ information for the first data to the first device based on the first indication information includes: The second device obtains the signal quality corresponding to the first data, and feeds back HARQ information for the first data to the first device based on the signal quality corresponding to the first data and the fifth information. The fifth information is used to indicate the first signal quality threshold or the second signal quality threshold. For related descriptions of the first signal quality threshold and the second signal quality threshold, refer to content in the foregoing embodiment. Optionally, when the location information of the first device is lost or invalid, the first device may indicate the second device to feed back HARQ information for the first data to the first device based on the information about the signal quality.

For example, when feeding back HARQ information includes sending an ACK without sending a NACK (sending only the ACK), that the second device feeds back HARQ information for the first data to the first device based on the signal quality corresponding to the first data and the fifth information includes: If the signal quality corresponding to the first data is greater than or equal to the signal quality threshold (the first signal quality threshold or the second signal quality threshold) indicated by the fifth information, the second device sends an ACK feedback to the first device; or if the signal quality corresponding to the first data is less than the signal quality threshold indicated by the fifth information, the second device does not send a feedback.

For example, when feeding back HARQ information includes sending a NACK without sending an ACK (sending only the NACK), that the second device feeds back HARQ information for the first data to the first device based on the signal quality corresponding to the first data and the fifth information includes: If the signal quality corresponding to the first data is greater than or equal to the signal quality threshold indicated by the fifth information, the second device does not send a feedback; or if the signal quality corresponding to the first data is less than the signal quality threshold indicated by the fifth information, the second device sends a NACK feedback to the first device.

For example, when feeding back HARQ information includes sending an ACK or a NACK, that the second device feeds back HARQ information for the first data to the first device based on the signal quality corresponding to the first data and the fifth information includes: If the signal quality corresponding to the first data is greater than or equal to the signal quality threshold indicated by the fifth information, the second device sends an ACK feedback to the first device; or if the signal quality corresponding to the first data is less than the signal quality threshold indicated by the fifth information, the second device sends a NACK feedback to the first device.

This implementation may be applied to a scenario in which the location information of the first device is lost, or a scenario in which signal quality-based feedback is preferentially performed. For example, if the first device cannot obtain the location of the first device (the location information of the first device is lost), the first device indicates the second device to feed back HARQ information for the first data to the first device based on the signal quality, where the first indication information sent by the first device to the second device includes the signal quality threshold corresponding to the first data. The second device feeds back HARQ information for the first data to the first device based on the signal quality corresponding to the first data and the signal quality threshold corresponding to the first data. An application scenario of this implementation is not limited in this embodiment of this application, and descriptions are provided herein by way of example only.

In still another implementation, when the first information is used to indicate the second device to feed back HARQ information for the first data based on the information about the signal quality, that the second device feeds back HARQ information for the first data to the first device based on the first indication information includes: The second device obtains the signal quality corresponding to the first data, obtains, based on the sixth information, the signal quality threshold corresponding to the first data, and feeds back HARQ information for the first data to the first device based on the signal quality corresponding to the first data and the signal quality threshold corresponding to the first data. The sixth information is used to indicate the power parameter used by the first device to send the first data. Optionally, when the location information of the first device is lost or invalid, the first device may indicate the second device to feed back HARQ information for the first data to the first device based on the information about the signal quality.

In this implementation, before step S304, the method may further include: The second device obtains sixth configuration information, where the sixth configuration information includes one or more power parameters and one or more signal quality thresholds corresponding to each power parameter. The one or more power parameters include the power parameter used by the first device to send the first data. That is, the second device may determine, based on the sixth configuration information, the signal quality threshold (a fourth signal quality threshold) corresponding to the power parameter used by the first device to send the first data. It may be understood that, for a manner in which the second device obtains the sixth configuration information and content of the sixth configuration information, refer to the manner in which the first device obtains the third configuration information and the related descriptions of the content of the third configuration information in step S301. Details are not described herein again. It should be noted that the sixth configuration information may be the same as or different from the third configuration information. This is not limited in this embodiment of this application.

For example, that the second device obtains, based on the sixth information, the signal quality threshold corresponding to the first data includes: The second device obtains, based on the power parameter used by the first device to send the first data, the fourth signal quality threshold corresponding to the power parameter used by the first device to send the first data. The fourth signal quality threshold is one of the one or more signal quality thresholds, and the fourth signal quality threshold is the signal quality threshold corresponding to the first data.

For example, when feeding back HARQ information includes sending an ACK without sending a NACK (sending only the ACK), that the second device feeds back HARQ information for the first data to the first device based on the signal quality corresponding to the first data and the signal quality threshold corresponding to the first data includes: If the signal quality corresponding to the first data is greater than or equal to the fourth signal quality threshold, the second device sends an ACK feedback to the first device; or if the signal quality corresponding to the first data is less than the fourth signal quality threshold, the second device does not send a feedback.

For example, when feeding back HARQ information includes sending a NACK without sending an ACK (sending only the NACK), that the second device feeds back HARQ information for the first data to the first device based on the signal quality corresponding to the first data and the signal quality threshold corresponding to the first data includes: If the signal quality corresponding to the first data is greater than or equal to the fourth signal quality threshold, the second device does not send a feedback; or if the signal quality corresponding to the first data is less than the fourth signal quality threshold, the second device sends a NACK feedback to the first device.

For example, when feeding back HARQ information includes sending an ACK or a NACK, that the second device feeds back HARQ information for the first data to the first device based on the signal quality corresponding to the first data and the signal quality threshold corresponding to the first data includes: If the signal quality corresponding to the first data is greater than or equal to the fourth signal quality threshold, the second device sends an ACK feedback to the first device; or if the signal quality corresponding to the first data is less than the fourth signal quality threshold, the second device sends a NACK feedback to the first device.

This implementation may be applied to a scenario in which the location information of the first device is lost. For example, if the first device cannot obtain the location of the first device (the location information of the first device is lost), the first device indicates the second device to feed back HARQ information for the first data to the first device based on the signal quality, where the first indication information sent by the first device to the second device includes the power parameter used by the first device to send the first data. The second device feeds back HARQ information for the first data to the first device based on the signal quality corresponding to the first data and the signal quality threshold corresponding to the first data. An application scenario of this implementation is not limited in this embodiment of this application, and descriptions are provided herein by way of example only.

In yet another implementation, if the first information is used to indicate the second device to feed back HARQ information based on the distance information and to feed back HARQ information based on the information about the signal quality, that the second device feeds back HARQ information for the first data to the first device based on the first indication information includes: The second device feeds back HARQ information for the first data to the first device based on the distance between the first device and the second device and the signal quality corresponding to the first data. For example, the second device may determine the distance between the first device and the second device based on the fourth information, where the fourth information is used to indicate the location of the first device and the minimum communication distance. The second device may obtain the signal quality corresponding to the first data and the signal quality threshold, and feed back HARQ information for the first data to the first device based on the distance between the first device and the second device, the signal quality corresponding to the first data, and the signal quality threshold. Optionally, when the distance between the first device and the second device is less than or equal to the minimum communication distance, the second device feeds back HARQ information. Alternatively, when the signal quality that corresponds to the first data and that is obtained by the second device is greater than or equal to the signal quality threshold, the second device feeds back HARQ information. Alternatively, when the distance between the first device and the second device is less than or equal to the minimum communication distance, and the signal quality that corresponds to the first data and that is obtained by the second device is greater than or equal to the signal quality threshold, the second device feeds back HARQ information.

For example, the signal quality threshold corresponding to the first data may be a signal quality threshold configured by the network device for the second device, may be a signal quality threshold that corresponds to the first data and that is determined by the second device based on the location of the first device, the channel congestion degree, the service load status, or the like, or may be a signal quality threshold that corresponds to the first data and that is determined by the second device based on the seventh information in the first indication information sent by the first device, where the seventh information is used to indicate the quality of service parameter of the first data. Optionally, the quality of service parameter of the first data indicated in the seventh information may be priority information of the first data.

In this implementation, for a specific implementation in which the second device determines, based on the seventh information in the first indication information sent by the first device, the signal quality threshold corresponding to the first data, refer to the foregoing embodiment. Details are not described herein again.

For example, when feeding back HARQ information includes sending an ACK without sending a NACK (sending only the ACK), that the second device feeds back HARQ information for the first data to the first device based on the distance between the first device and the second device and the signal quality corresponding to the first data includes: If the signal quality corresponding to the first data is greater than or equal to the third signal quality threshold (or a signal quality threshold configured by the network device) and the distance between the first device and the second device is less than the minimum communication distance, if the signal quality corresponding to the first data is less than the third signal quality threshold (or a signal quality threshold configured by the network device) and the distance between the first device and the second device is less than the minimum communication distance, or if the signal quality corresponding to the first data is greater than or equal to the third signal quality threshold (or a signal quality threshold configured by the network device) and the distance between the first device and the second device is greater than the minimum communication distance, the second device sends an ACK feedback to the first device; or if the signal quality corresponding to the first data is less than the third signal quality threshold (or a signal quality threshold configured by the network device) and the distance between the first device and the second device is greater than the minimum communication distance, the second device does not send a feedback.

For example, when feeding back HARQ information includes sending a NACK without sending an ACK (sending only the NACK), that the second device feeds back HARQ information for the first data to the first device based on the distance between the first device and the second device and the signal quality corresponding to the first data includes: If the signal quality corresponding to the first data is greater than or equal to the third signal quality threshold (or a signal quality threshold configured by the network device) and the distance between the first device and the second device is less than the minimum communication distance, if the signal quality corresponding to the first data is less than the third signal quality threshold (or a signal quality threshold configured by the network device) and the distance between the first device and the second device is less than the minimum communication distance, or if the signal quality corresponding to the first data is greater than or equal to the third signal quality threshold (or a signal quality threshold configured by the network device) and the distance between the first device and the second device is greater than the minimum communication distance, the second device does not send a feedback; or if the signal quality corresponding to the first data is less than the third signal quality threshold (or a signal quality threshold configured by the network device) and the distance between the first device and the second device is greater than the minimum communication distance, the second device sends a NACK feedback to the first device.

For example, when feeding back HARQ information includes sending an ACK or a NACK, that the second device feeds back HARQ information for the first data to the first device based on the distance between the first device and the second device and the signal quality corresponding to the first data includes: If the signal quality corresponding to the first data is greater than or equal to the third signal quality threshold (or a signal quality threshold configured by the network device) and the distance between the first device and the second device is less than the minimum communication distance, if the signal quality corresponding to the first data is less than the third signal quality threshold (or a signal quality threshold configured by the network device) and the distance between the first device and the second device is less than the minimum communication distance, or if the signal quality corresponding to the first data is greater than or equal to the third signal quality threshold (or a signal quality threshold configured by the network device) and the distance between the first device and the second device is greater than the minimum communication distance, the second device sends an ACK feedback to the first device; or if the signal quality corresponding to the first data is less than the third signal quality threshold (or a signal quality threshold configured by the network device) and the distance between the first device and the second device is greater than the minimum communication distance, the second device sends a NACK feedback to the first device.

This implementation may be applied to a scenario in which neither the location information of the first device nor the location information of the second device is lost. For example, after obtaining the location information of the first device, the first device indicates the second device to feed back HARQ information for the first data to the first device based on the signal quality and the distance information. The second device feeds back HARQ information for the first data to the first device based on the signal quality corresponding to the first data and the distance between the first device and the second device. An application scenario of this implementation is not limited in this embodiment of this application, and descriptions are provided herein by way of example only.

In yet another implementation, if the first information is used to indicate the second device to feed back HARQ information based on the distance information and to feed back HARQ information based on the information about the signal quality, that the second device feeds back HARQ information for the first data to the first device based on the first indication information includes: The second device obtains the signal quality corresponding to the first data, determines the signal quality threshold corresponding to the first data, and feeds back HARQ information for the first data to the first device based on the signal quality corresponding to the first data and the signal quality threshold corresponding to the first data. Optionally, when the location information of the second device is lost or invalid, the second device feeds back HARQ information for the first data to the first device based on the signal quality corresponding to the first data and the signal quality threshold corresponding to the first data.

For example, that the second device determines the signal quality threshold corresponding to the first data may include: The second device determines, based on the seventh information, the signal quality threshold corresponding to the first data, where the seventh information is used to indicate the quality of service parameter of the first data. For example, the second device may determine, based on the quality of service parameter of the first data and fifth configuration information, a third signal quality threshold corresponding to the quality of service parameter of the first data. Correspondingly, the second device may feed back HARQ information for the first data to the first device based on the third signal quality threshold and the signal quality corresponding to the first data. It may be understood that for a specific implementation in which the second device may feed back HARQ information for the first data to the first device based on the third signal quality threshold and the signal quality corresponding to the first data, refer to the foregoing embodiment. Details are not described herein again.

For example, that the second device determines the signal quality threshold corresponding to the first data may further include: The second device obtains a fifth signal quality threshold sent by the base station. Correspondingly, the second device may feed back HARQ information for the first data to the first device based on the fifth signal quality threshold and the signal quality corresponding to the first data. It may be understood that, for a specific implementation in which the second device may feed back HARQ information for the first data to the first device based on the fifth signal quality threshold and the signal quality corresponding to the first data, refer to the implementation in which the second device may feed back HARQ information for the first data to the first device based on the third signal quality threshold and the signal quality corresponding to the first data in the foregoing embodiment. Details are not described herein again.

This implementation may be applied to a scenario in which the location information of the first device is not lost but the location information of the second device is lost. For example, after obtaining the location information of the first device, the first device indicates the second device to feed back HARQ information for the first data to the first device based on the signal quality and the distance information. Because the second device cannot obtain the location information of the second device (the location information of the second device is lost), the second device feeds back HARQ information for the first data to the first device based on the signal quality corresponding to the first data and the signal quality threshold corresponding to the first data. An application scenario of this implementation is not limited in this embodiment of this application, and descriptions are provided herein by way of example only.

This embodiment of this application provides the communication method. In the method, the first device obtains the first indication information, the first device sends the first indication information and the first data to the second device, the second device obtains the first indication information, the second device receives the first data sent by the first device, and the second device feeds back HARQ information for the first data to the first device based on the first indication information. In this embodiment, the first device obtains a manner in which the second device feeds back HARQ information for the first data to the first device, so that the first device can indicate the second device to switch among a plurality of feedback manners. The method is applicable to more scenarios, and can improve reliability of communication between a transmitter and a receiver.

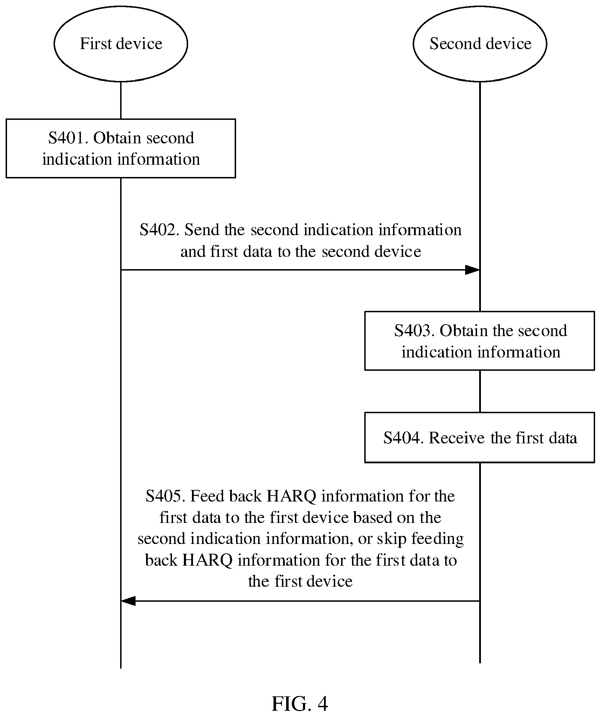

An embodiment of this application further provides a communication method. As shown in FIG. 4, the method may include steps S401 to S405.

S401. A first device obtains second indication information.

The second indication information includes tenth information, and the tenth information is used to indicate a second device to feed back HARQ information for first data based on distance information, or indicate the second device not to feed back HARQ information for the first data.

For example, the distance information may be a distance between the first device and the second device. Optionally, the tenth information may be used to indicate the second device to feed back HARQ information for the first data based on the distance between the first device and the second device, or indicate the second device not to feed back HARQ information for the first data.

In an implementation, that a first device obtains second indication information may include: The first device obtains seventh configuration information, where the seventh configuration information is used to indicate the second indication information. The seventh configuration information may be configuration information sent by a base station. It may be understood that, in this implementation, the base station may configure a feedback manner of the second device, and send the configuration to the first device. The first device may determine a specific feedback manner based on the configuration of the base station. Optionally, the seventh configuration information may be indicated by a third device to the first device by using signaling, and the third device may be a device that performs sidelink communication. Optionally, the seventh configuration information may be preconfigured.

For example, the seventh configuration information may be indicated by the base station by using instructions, or may be indicated by another terminal device that performs sidelink communication. This is not limited in this embodiment of this application. Optionally, when the seventh configuration information may be carried in a message sent by the third device, the seventh configuration information may be indicated by using sidelink RRC signaling of UE.

In another implementation, that a first device obtains second indication information may include: The first device obtains channel quality information, and the first device determines the second indication information based on the channel quality information.

For example, the first device may determine the second indication information based on a channel congestion degree. For example, when a channel is relatively congested, it may be determined that the tenth information is used to indicate the second device not to feed back HARQ information for the first data. Alternatively, when the channel is not congested, it may be determined that the tenth information is used to indicate the second device to feed back HARQ information based on the distance between the first device and the second device. A specific rule used by the first device to determine the second indication information based on the channel quality information is not limited in this embodiment of this application, and descriptions are provided herein by way of example only.

In still another implementation, that a first device obtains second indication information may include: The first device obtains a location of the first device; and if the first device cannot obtain the location of the first device, the first device determines that the second indication information is used to indicate the second device not to feed back HARQ information for the first data; or if the first device obtains the location of the first device, the first device determines that the second indication information is used to indicate the second device to feed back HARQ information for the first data based on the distance between the first device and the second device.

For example, the location of the first device may be a geographical location of the first device. The geographical location of the first device may be location coordinates obtained based on a satellite, for example, may be global positioning system coordinates or BeiDou location coordinates. Alternatively, the location of the first device may be location information obtained based on another positioning system or positioning technology, for example, location information obtained based on inertial navigation, location information obtained based on radar, or location information obtained based on a positioning signal between a network device and UE. This is not limited in this embodiment of this application. It may be understood that a reason why the first device cannot obtain the location of the first device may be that a current location of the first device is not covered by a network, a network signal is relatively poor, or the like. This is not limited in this embodiment of this application.

It should be noted that a specific manner in which the first device obtains the second indication information is not limited in this embodiment of this application, and descriptions are provided herein by way of example only. For example, the first device may further obtain the second indication information depending on a feedback of whether resources are sufficient.

For example, a HARQ information feedback manner includes: sending an acknowledgment (acknowledgement, ACK) without sending a negative acknowledgment (negative acknowledgement, NACK), sending a negative acknowledgment (NACK) without sending an ACK, or sending an ACK or a NACK. That is, feeding back HARQ information includes sending only an ACK, sending only a NACK, or sending an ACK or a NACK.

Optionally, the HARQ information feedback manner may be configured by the network device (for example, a base station device). The network device may indicate, by using signaling, a specific HARQ feedback manner. The first device and/or the second device may perform feedback according to the specific HARQ feedback manner configured by the base station.

It may be understood that in this embodiment of this application, the first device may determine a feedback manner of the second device, and send the second device indication information indicating the feedback manner of the second device, so that the first device can indicate the second device to switch the feedback manner. The method is applicable to more scenarios, and can improve reliability of communication between a transmitter and a receiver.

S402. The first device sends the second indication information and the first data to the second device.

For example, the first device may send the second indication information and the first data in a multicast, unicast, or broadcast manner. For example, the first device may send the second indication information and the first data to one second device (in a unicast scenario), or the first device may send the second indication information and the first data to a plurality of second devices (in a multicast scenario). Alternatively, the first device may send the second indication information and the first data to an unlimited quantity of second devices (in a broadcast scenario). Optionally, when the first device sends the second indication information and the first data to a plurality of second devices, the second devices may be receivers clear to the first device, or may be receivers unknown by or unclear to the first device. This is not limited in this embodiment of this application.

For example, when the first device sends the second indication information and the first data, the second indication information and the first data may be sent at the same time, or may be sent at different time points. This is not limited in this embodiment of this application. Optionally, the first data may be sent in a slot in which the first device sends the second indication information. Optionally, the first data may be sent in a slot before or after a slot in which the first device sends the second indication information. Optionally, the second indication information may be information used to indicate a transmission parameter of the first data. Optionally, one or more pieces of first data may share one piece of second indication information.

Optionally, when the first device sends the second indication information, the second indication information may be carried in SCI. For example, the first device may send the SCI in a slot for sending the first data.

Optionally, in the SCI, a 2-, 3-, or 4-bit field may be used to indicate the tenth information. A specific quantity of bits of the tenth information is not limited in this embodiment of this application.

Optionally, the SCI may include a first field, and different values of the first field are used to indicate the second device to feed back HARQ information for the first data based on the distance information, or indicate the second device not to feed back HARQ information for the first data. For example, the first field in the SCI contains 1 bit. When a value of the first field is 0, the tenth information is used to indicate the second device to feed back HARQ information for the first data based on the distance information. When the value of the first field is 1, the tenth information is used to indicate the second device not to feed back HARQ information for the first data. A quantity of bits of occupied by the first field in the SCI is not limited in this embodiment of this application, and descriptions are provided herein by way of example only.

For example, the second indication information may further include eleventh information. The eleventh information is used to indicate one or more of a quantity of transmissions of the first data, information indicating a time domain relationship between a plurality of transmissions of the first data, and information indicating a frequency domain relationship between the plurality of transmissions of the first data. Optionally, for example, when the first data is transmitted with no HARQ feedback, the quantity N of transmissions of the first data may be one or more of 1, 2, 4, and 8. Optionally, the eleventh information may indicate the quantity N of transmissions of the first data. Optionally, for the N transmissions of the first data, indication information of a time domain interval between two or more adjacent transmissions of the first data may be indicated by using the eleventh information. Optionally, for the N transmissions of the first data, indication information of a frequency domain resource interval between two or more adjacent transmissions of the first data may be indicated by using the eleventh information. Optionally, when the N transmissions of the first data are performed in a time domain frequency hopping and/or a frequency domain frequency hopping manner, the eleventh information is further used to indicate a frequency hopping parameter.

For example, the eleventh information may be indicated by using the SCI, some or all bits of the eleventh information may be carried by using the SCI, or the eleventh information may be indicated by using MAC signaling, RRC signaling, or preconfigured signaling. Optionally, some bits of the eleventh information may be carried by using the SCI, and the other bits may be carried by using MAC signaling, RRC signaling, or preconfigured signaling.

For example, the second indication information may further include twelfth information, and the twelfth information is used to indicate the location of the first device. For example, the twelfth information may indicate an identifier of a first area in which the first device is located, or indicate location coordinates (for example, GPS coordinates) of the first device. A specific form of the location of the first device is not limited in this embodiment of this application, and descriptions are provided herein by way of example only.

Optionally, the twelfth information is further used to indicate a minimum communication distance of the first data. The minimum communication distance may also be referred to as a required minimum communication distance or a required minimum distance, and is a minimum distance required to achieve a specific transmission latency, specific transmission reliability, or a specific transmission rate. Optionally, when a distance between the receiver and the transmitter (which may be referred to as a transceiver) is less than or equal to the minimum communication distance, communication between the receiver and the transmitter needs to meet requirements on the transmission latency, reliability, rate, and the like. When the distance between the receiver and the transmitter is greater than or equal to the required minimum distance, the communication between the receiver and the transmitter does not need to meet the requirements on the transmission latency, reliability, rate, and the like.

For example, the twelfth information may be indicated by using the SCI, some or all bits of the twelfth information may be carried by using the SCI, or the twelfth information may be indicated by using MAC signaling, RRC signaling, or preconfigured signaling. Optionally, some bits of the twelfth information may be carried by using the SCI, and the other bits may be carried by using MAC signaling, RRC signaling, or preconfigured signaling.

Optionally, when the twelfth information is used to indicate both the location of the first device and the minimum communication distance corresponding to the first data, a joint field or two or more different fields may be used for indication. This is not limited in this embodiment of this application.

Optionally, the second indication information may further include a second field, and different values of the second field are used to indicate the eleventh information or the twelfth information. For example, in the SCI, the second field contains 4 bits. When a value of the second field ranges from 0 to 10 (corresponding to binary 0000 to 1010), it indicates that the second field indicates the eleventh information. When the value of the second field ranges from 11 to 15 (corresponding to binary 1011 to 1111), it indicates that the second field indicates the twelfth information. It may be understood that the second field in the SCI may be reused for the eleventh information and the twelfth information. When the values of the second field are different, information indicated by the second field is different.

Optionally, the second indication information may further include thirteenth information, and the thirteenth information is used to indicate that information indicated by a third field in the SCI is the eleventh information or the twelfth information. For example, in the SCI, the thirteenth information occupies 1 bit, and the third field contains 4 bits. When a value of the thirteenth information is 0, the third field indicates the eleventh information. When the value of the thirteenth information is 1, the third field indicates the twelfth information. It may be understood that, different from the foregoing implementation, in this implementation, a single field may be used to indicate the information indicated by the third field.

The thirteenth information may be carried in the SCI. Optionally, the thirteenth information may be the tenth information, or may be different from the tenth information.

It may be understood that if the thirteenth information is the tenth information, when the tenth information is used to indicate the second device to feed back HARQ information for the first data based on the distance information, the third field indicates the twelfth information; or when the tenth information is used to indicate the second device not to feed back HARQ information for the first data, the third field indicates the eleventh information.

S403. The second device obtains the second indication information.

For example, that the second device obtains the second indication information may include: The second device receives the second indication information sent by the first device.

Optionally, the second device may further receive eighth configuration information sent by the network device (for example, the base station device), and determine the feedback manner of the second device based on the eighth configuration information sent by the network device and the second indication information sent by the first device. The eighth configuration information may indicate the second device to feed back HARQ information of the first data to the first device, or not to feed back HARQ information of the first data to the first device.

Optionally, the eighth configuration information may be indicated by the base station by using instructions (for example, system information blocks (SIBs) or RRC signaling), or may be indicated by another terminal device that performs sidelink communication (for example, indicated by using RRC signaling or MAC signaling). This is not limited in this embodiment of this application.

S404. The second device receives the first data sent by the first device.

For example, a moment at which the second device receives the first data sent by the first device may be the same as or different from a moment at which the second device receives the second indication information sent by the first device. This is not limited in this embodiment of this application.

S405. The second device feeds back HARQ information for the first data to the first device based on the second indication information, or does not feed back HARQ information for the first data to the first device.

In an implementation, if the tenth information indicates the second device to feed back HARQ information for the first data based on the distance information, that the second device feeds back HARQ information for the first data to the first device based on the second indication information may include: The second device determines the distance between the first device and the second device based on the twelfth information, and feeds back HARQ information based on the distance between the first device and the second device. The twelfth information is used to indicate the location of the first device and the minimum communication distance. It may be understood that a specific implementation in which the second device determines the distance between the first device and the second device based on the twelfth information is not limited in this embodiment of this application. For details, refer to a method in the conventional technology.

For example, when feeding back HARQ information includes sending an ACK without sending a NACK (sending only the ACK), that the second device feeds back HARQ information based on the distance between the first device and the second device includes: If the distance between the first device and the second device is less than the minimum communication distance, the second device sends an ACK feedback to the first device; or if the distance between the first device and the second device is greater than or equal to the minimum communication distance, the second device does not send a feedback.

For example, when feeding back HARQ information includes sending a NACK without sending an ACK (sending only the NACK), that the second device feeds back HARQ information based on the distance between the first device and the second device includes: If the distance between the first device and the second device is less than the minimum communication distance, the second device does not send a feedback; or if the distance between the first device and the second device is greater than or equal to the minimum communication distance, the second device sends a NACK feedback to the first device.

For example, when feeding back HARQ information includes sending an ACK or a NACK, that the second device feeds back HARQ information based on the distance between the first device and the second device includes: If the distance between the first device and the second device is less than the minimum communication distance, the second device sends an ACK feedback to the first device; or if the distance between the first device and the second device is greater than or equal to the minimum communication distance, the second device sends a NACK feedback to the first device.

In another implementation, if the tenth information indicates the second device not to feed back HARQ information for the first data, the second device does not feed back HARQ information for the first data to the first device. In this implementation, the first device may repeatedly transmit the first data to the second device for a plurality of times.

This embodiment of this application provides the communication method. In the method, the first device obtains the second indication information, the first device sends the second indication information and the first data to the second device, the second device obtains the second indication information, the second device receives the first data sent by the first device, and the second device feeds back HARQ information for the first data to the first device based on the second indication information. In this embodiment, the first device obtains a manner in which the second device feeds back HARQ information for the first data to the first device, so that the first device can indicate the second device to switch among different feedback manners. The method is applicable to more scenarios, and can improve reliability of communication between a transmitter and a receiver.

An embodiment of this application further provides a terminal device. The terminal device may be one or more components or units built in a vehicle-mounted module, a vehicle-mounted component, a vehicle-mounted chip, or a vehicle-mounted unit of the vehicle. The vehicle may implement the communication method in the foregoing embodiments by using the terminal device built in the vehicle-mounted module, the vehicle-mounted component, the vehicle-mounted chip, or the vehicle-mounted unit.

The foregoing describes, mainly from the perspective of method steps, the solutions provided in the embodiments of this application. It may be understood that, to implement the foregoing functions, a communication device includes a hardware structure and/or a software module for performing a corresponding function. A person skilled in the art should be easily aware that, in combination with modules and algorithm steps of the examples described in the embodiments disclosed in this specification, this application may be implemented by a combination of hardware and computer software. A person skilled in the art may use different methods to implement the described functions for each particular application, but it should not be considered that the implementation goes beyond the scope of this application.

In the embodiments of this application, the communication device may be divided into function modules based on the foregoing method examples. For example, each function module may be obtained through division based on a corresponding function, or two or more functions may be integrated into one processing module. The integrated module may be implemented in a form of hardware, or may be implemented in a form of a software function module. It should be noted that in the embodiments of this application, division into modules is an example, and is merely logical function division. During actual implementation, there may be another division manner.

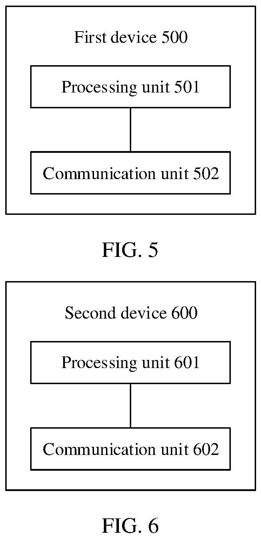

When each function module is obtained through division based on each corresponding function, FIG. 5 is a possible schematic diagram of a structure of the first device in the foregoing embodiments. A first device 500 includes a processing unit 501 and a communication unit 502. The processing unit 501 may perform S301 and S302 in FIG. 3, or S401 and S402 in FIG. 4 by using the communication unit 502. It may be understood that the communication unit 502 may be configured to: send and receive information, or communicate with another network element, and/or perform another process of the technology described in this specification. All related content of the steps in the foregoing method embodiments may be cited in function descriptions of corresponding function modules. Details are not described herein again.

When each function module is obtained through division based on each corresponding function, FIG. 6 is a possible schematic diagram of a structure of the second device in the foregoing embodiments. A second device 600 includes a processing unit 601 and a communication unit 602. The processing unit 601 may perform S303 to S305 in FIG. 3, or S403 to S405 in FIG. 4. It may be understood that the communication unit 602 may be configured to: send and receive information, or communicate with another network element, and/or perform another process of the technology described in this specification. All related content of the steps in the foregoing method embodiments may be cited in function descriptions of corresponding function modules. Details are not described herein again.

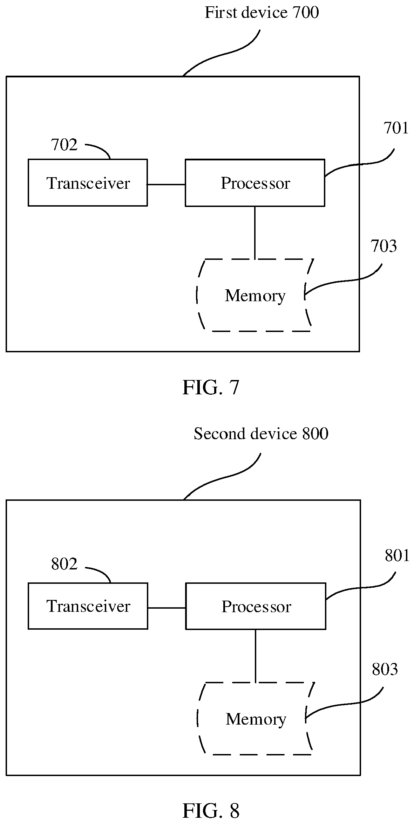

When an integrated unit is used, FIG. 7 is a possible schematic diagram of a structure of a first device in the foregoing embodiments. The first device 700 includes a processor 701 and a transceiver 702. The processor 701 is configured to: control and manage an action of the first device 700, for example, the processor 701 may perform S301 and S302 in FIG. 3 by using the transceiver 702, or S401 and S402 in FIG. 4, and/or another process used in the technology described in this specification. The transceiver 702 sends and receives information, or is configured to communicate with another network element, and/or is configured to perform another process of the technology described in this specification. Optionally, the first device 700 may further include a memory 703, and the memory 703 is configured to store program code and data corresponding to any one of the foregoing communication methods performed by the first device 700. The memory 703 may be a read-only memory (read-only memory, ROM), another type of static storage device capable of storing static information and instructions, a random access memory (random access memory, RAM), or the like. The first device 700 may be the communication device shown in FIG. 2. Descriptions of all related content of the components in FIG. 2 may be cited in function descriptions of the corresponding components in FIG. 7. Details are not described herein again.

When an integrated unit is used, FIG. 8 is a possible schematic diagram of a structure of a second device in the foregoing embodiments. The second device 800 includes a processor 801 and a transceiver 802. The processor 801 is configured to control and manage an action of the second device 800, for example, the processor 801 may perform S303 to S305 in FIG. 3, or S403 to S405 in FIG. 4, and/or another process used in the technology described in this specification. The transceiver 802 is configured to send and receive information, or communicate with another network element, and/or perform another process of the technology described in this specification. Optionally, the second device 800 may further include a memory 803, and the memory 803 is configured to store program code and data corresponding to any one of the foregoing communication methods performed by the second device 800. The memory 803 may be a read-only memory (read-only memory, ROM), another type of static storage device capable of storing static information and instructions, a random access memory (random access memory, RAM), or the like. The second device 800 may be the communication device shown in FIG. 2. Descriptions of all related content of the components in FIG. 2 may be cited in function descriptions of the corresponding components in FIG. 8. Details are not described herein again.

In combination with the examples described in the embodiments disclosed in this application, methods or algorithm steps may be implemented by hardware, or a processor executing a software instruction. The software instruction may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium, and write the information into the storage medium. Certainly, the storage medium may be a component of the processor. The processor and the storage medium may be located in an ASIC. In addition, the ASIC may be located in an interface device of a core network. Certainly, the processor and the storage medium may alternatively exist in the interface device of the core network as discrete components.

A person skilled in the art should be aware that in one or more of the foregoing examples, functions described in this application may be implemented by using hardware, software, firmware, or any combination thereof. When software is used to implement the functions, the functions may be stored in a computer-readable medium or transmitted as one or more instructions or code in the computer-readable medium. The computer-readable medium includes a computer storage medium and a communication medium, where the communication medium includes any medium that facilitates transmission of a computer program from one place to another. The storage medium may be any available medium accessible to a general-purpose or a dedicated computer.

The scope of protection is defined by the appended claims.

## Claims

1. A communication method, wherein the method comprises:
obtaining (S301), by a first device (500), first indication information; and
sending (S302), by the first device, the first indication information and first data to a second device (600), wherein the first indication information comprises first information, and the first information is used to indicate the second device to feed back hybrid automatic repeat request, HARQ, information for the first data based on distance information, and/or indicate the second device to feed back HARQ information for the first data based on information about signal quality, and
receiving, by the first device, HARQ information for the first data fed back by the second device based on the first indication information,
wherein the first indication information comprises a first field, and three different values of the first field are used to indicate the second device to feed back HARQ information for the first data based on the distance information using the first of the three different values, on the information about the signal quality using the second of the three different values, and on both the distance information and the information about the signal quality using the third of the three different values.

2. The method according to claim 1, wherein the signal quality comprises any one or more of reference signal received power, RSRP, reference signal received quality, RSRQ, a received signal strength indication, RSSI, and a signal to interference plus noise ratio, SINR.

3. The method according to any one of claims 1 to 2, wherein the method further comprises:
obtaining, by the first device (500), first configuration information, wherein the first configuration information is used to indicate the first indication information; or
obtaining, by the first device, channel quality information, and obtaining, by the first device, the first indication information based on the channel quality information.

4. The method according to any one of claims 1 to 3, wherein feeding back HARQ information comprises: sending an acknowledgment, ACK without sending a negative acknowledgment, NACK, sending a negative acknowledgment, NACK without sending an ACK, or sending an ACK or a NACK.

5. A communication method, wherein the method comprises:
obtaining (S303), by a second device, first indication information, wherein the first indication information comprises first information, and the first information is used to indicate the second device to feed back hybrid automatic repeat request, HARQ, information for first data based on distance information, and/or indicate the second device to feed back HARQ information for the first data based on information about signal quality;
receiving (S304), by the second device, the first data sent by a first device; and
feeding back (S305), by the second device, HARQ information for the first data to the first device based on the first indication information,
wherein the first indication information comprises a first field, and three different values of the first field are used to indicate the second device to feed back HARQ information for the first data based on the distance information using the first of the three different values, on the information about the signal quality using the second of the three different values, and on both the distance information and the information about the signal quality using the third of the three different values.

6. The method according to claim 5, wherein the signal quality comprises any one or more of reference signal received power, RSRP, reference signal received quality, RSRQ, a received signal strength indication, RSSI, and a signal to interference plus noise ratio, SINR.

7. The method according to any one of claims 5 to 6, wherein feeding back HARQ information for the first data comprises: sending an acknowledgment, ACK, without sending a negative acknowledgment, NACK, sending a negative acknowledgment, NACK, without sending an ACK, or sending an ACK or a NACK.

8. An apparatus configured to perform the method according to any one of claims 1 to 4.

9. An apparatus configured to perform the method according to any one of claims 5 to 7.

10. A computer-readable storage medium comprising instructions which, when executed by a computer, cause the computer to carry out the method according to any one of claims 1 to 4 or any one of claims 5 to 7.

## Patentansprüche

1. Kommunikationsverfahren, wobei das Verfahren Folgendes umfasst:
Erlangen (S301) erster Angabeinformationen durch eine erste Vorrichtung (500); und
Senden (S302) der ersten Angabeinformationen und erster Daten durch die erste Vorrichtung an eine zweite Vorrichtung (600), wobei die ersten Angabeinformationen erste Informationen umfassen und die ersten Informationen verwendet werden, um der zweiten Vorrichtung anzugeben, Hybrid-Automatic-Repeat-Request(HARQ)-Informationen für die ersten Daten basierend auf Entfernungsinformationen zurückzumelden, und/oder der zweiten Vorrichtung anzugeben, HARQ-Informationen für die ersten Daten basierend auf Informationen über die Signalqualität zurückzumelden, und
Empfangen von HARQ-Informationen für die ersten Daten durch die erste Vorrichtung, die durch die zweite Vorrichtung basierend auf den ersten Angabeinformationen zurückgemeldet werden,
wobei die ersten Angabeinformationen ein erstes Feld umfassen und drei unterschiedliche Werte des ersten Felds verwendet werden, um der zweiten Vorrichtung anzugeben, HARQ-Informationen für die ersten Daten basierend auf den Entfernungsinformationen unter Verwendung des ersten der drei unterschiedlichen Werte, auf den Informationen über die Signalqualität unter Verwendung des zweiten der drei unterschiedlichen Werte und sowohl auf den Entfernungsinformation als auch den Information über die Signalqualität unter Verwendung des dritten der drei unterschiedlichen Werte zurückzumelden.

2. Verfahren nach Anspruch 1, wobei die Signalqualität eines oder mehrere von Referenzsignal-Empfangsleistung, RSRP, Referenzsignal-Empfangsqualität, RSRQ, einer Angabe der Empfangssignalstärke, RSSI, und einem Verhältnis von Signal zu Störungen und Rauschen, SINR, umfasst.

3. Verfahren nach einem der Ansprüche 1 bis 2, wobei das Verfahren ferner Folgendes umfasst:
Erlangen erster Konfigurationsinformationen durch die erste Vorrichtung (500), wobei die ersten Konfigurationsinformationen verwendet werden, um die ersten Angabeinformationen anzugeben; oder
Erlangen von Kanalqualitätsinformationen durch die erste Vorrichtung und Erlangen der ersten Angabeinformationen durch die erste Vorrichtung basierend auf den Kanalqualitätsinformationen.

4. Verfahren nach einem der Ansprüche 1 bis 3, wobei das Rückmelden von HARQ-Informationen Folgendes umfasst: Senden einer Bestätigung, ACK, ohne Senden einer negativen Bestätigung, NACK, Senden einer negativen Bestätigung, NACK, ohne Senden einer ACK, oder Senden einer ACK oder einer NACK.

5. Kommunikationsverfahren, wobei das Verfahren Folgendes umfasst:
Erlangen (S303) erster Angabeinformationen durch eine zweite Vorrichtung, wobei die ersten Angabeinformationen erste Informationen umfassen und die ersten Informationen verwendet werden, um der zweiten Vorrichtung anzugeben, Hybrid-Automatic-Repeat-Request(HARQ)-Informationen für erste Daten basierend auf Entfernungsinformationen zurückzumelden, und/oder der zweiten Vorrichtung anzugeben, HARQ-Informationen für die ersten Daten basierend auf Informationen über die Signalqualität zurückzumelden;
Empfangen (S304) der ersten Daten, die durch eine erste Vorrichtung gesendet werden, durch die zweite Vorrichtung; und
Zurückmelden (S305) von HARQ-Informationen für die ersten Daten durch die zweite Vorrichtung an die erste Vorrichtung basierend auf den ersten Angabeinformationen,
wobei die ersten Angabeinformationen ein erstes Feld umfassen und drei unterschiedliche Werte des ersten Felds verwendet werden, um der zweiten Vorrichtung anzugeben, HARQ-Informationen für die ersten Daten basierend auf den Entfernungsinformationen unter Verwendung des ersten der drei unterschiedlichen Werte, auf den Informationen über die Signalqualität unter Verwendung des zweiten der drei unterschiedlichen Werte und sowohl auf den Entfernungsinformation als auch den Information über die Signalqualität unter Verwendung des dritten der drei unterschiedlichen Werte zurückzumelden.

6. Verfahren nach Anspruch 5, wobei die Signalqualität eines oder mehrere von Referenzsignal-Empfangsleistung, RSRP, Referenzsignal-Empfangsqualität, RSRQ, einer Angabe der Empfangssignalstärke, RSSI, und einem Verhältnis von Signal zu Störungen und Rauschen, SINR, umfasst.

7. Verfahren nach einem der Ansprüche 5 bis 6, wobei das Rückmelden von HARQ-Informationen für die ersten Daten Folgendes umfasst: Senden einer Bestätigung, ACK, ohne Senden einer negativen Bestätigung, NACK, Senden einer negativen Bestätigung, NACK, ohne Senden einer ACK, oder Senden einer ACK oder einer NACK.

8. Einrichtung, die dazu konfiguriert ist, das Verfahren nach einem der Ansprüche 1 bis 4 durchzuführen.

9. Einrichtung, die dazu konfiguriert ist, das Verfahren nach einem der Ansprüche 5 bis 7 durchzuführen.

10. Computerlesbares Speichermedium, das Anweisungen umfasst, die bei Ausführung durch einen Computer den Computer dazu veranlassen, das Verfahren nach einem der Ansprüche 1 bis 4 oder einem der Ansprüche 5 bis 7 zu realisieren.

## Revendications

1. Procédé de communication, dans lequel le procédé comprend :
l'obtention (S301), par un premier dispositif (500), de premières informations d'indication ; et
l'envoi (S302), par le premier dispositif, des premières informations d'indication et des premières données à un second dispositif (600), dans lequel les premières informations d'indication comprennent des premières informations, et les premières informations sont utilisées pour indiquer au second dispositif de renvoyer des informations de demande de répétition automatique hybride, HARQ, pour les premières données basées sur des informations de distance, et/ou indiquer au second dispositif de renvoyer des informations HARQ pour les premières données basées sur des informations sur la qualité du signal, et la réception, par le premier dispositif, d'informations HARQ pour les premières données renvoyées par le second dispositif à partir des premières informations d'indication, et
dans lequel les premières informations d'indication comprennent un premier champ, et trois valeurs différentes du premier champ sont utilisées pour indiquer au second dispositif de renvoyer des informations HARQ pour les premières données sur la base des informations de distance en utilisant la première des trois valeurs différentes, sur les informations sur la qualité du signal en utilisant la deuxième des trois valeurs différentes, et à la fois sur les informations de distance et les informations sur la qualité du signal en utilisant la troisième des trois valeurs différentes.

2. Procédé selon la revendication 1, dans lequel la qualité du signal comprend n'importe quel un ou plusieurs éléments parmi la puissance reçue du signal de référence, RSRP, la qualité reçue du signal de référence, RSRQ, une indication d'intensité du signal reçu, RSSI, et un rapport signal sur interférence plus bruit, SINR.

3. Procédé selon l'une quelconque des revendications 1 et 2, dans lequel le procédé comprend en outre :
l'obtention, par le premier dispositif (500), de premières informations de configuration, dans lequel les premières informations de configuration sont utilisées pour indiquer les premières informations d'indication ; ou
l'obtention, par le premier dispositif, d'informations de qualité de canal, et l'obtention, par le premier dispositif, des premières informations d'indication sur la base des informations de qualité de canal.

4. Procédé selon l'une quelconque des revendications 1 à 3, dans lequel le renvoi d'informations HARQ comprend : l'envoi d'un accusé de réception, ACK sans envoyer d'accusé de réception négatif, NACK, l'envoi d'un accusé de réception négatif, NACK sans envoyer d'ACK, ou l'envoi d'un ACK ou d'un NACK.

5. Procédé de communication, dans lequel le procédé comprend :
l'obtention (S303), par un second dispositif, de premières informations d'indication, dans lequel les premières informations d'indication comprennent des premières informations, et les premières informations sont utilisées pour indiquer au second dispositif de renvoyer des informations de demande de répétition automatique hybride, HARQ, pour des premières données basées sur des informations de distance, et/ou indiquer au second dispositif de renvoyer des informations HARQ pour les premières données basées sur des informations sur la qualité du signal ;
la réception (S304), par le second dispositif, des premières données envoyées par un premier dispositif ; et
le renvoi (S305), par le second dispositif, d'informations HARQ pour les premières données au premier dispositif sur la base des premières informations d'indication,
dans lequel les premières informations d'indication comprennent un premier champ, et trois valeurs différentes du premier champ sont utilisées pour indiquer au second dispositif de renvoyer des informations HARQ pour les premières données sur la base des informations de distance en utilisant la première des trois valeurs différentes, sur les informations sur la qualité du signal en utilisant la deuxième des trois valeurs différentes, et à la fois sur les informations de distance et les informations sur la qualité du signal en utilisant la troisième des trois valeurs différentes.

6. Procédé selon la revendication 5, dans lequel la qualité du signal comprend n'importe quel un ou plusieurs éléments parmi la puissance reçue du signal de référence, RSRP, la qualité reçue du signal de référence, RSRQ, une indication d'intensité du signal reçu, RSSI, et un rapport signal sur interférence plus bruit, SINR.

7. Procédé selon l'une quelconque des revendications 5 à 6, dans lequel le renvoi d'informations HARQ pour les premières données comprend : l'envoi d'un accusé de réception, ACK, sans envoyer d'accusé de réception négatif, NACK, l'envoi d'un accusé de réception négatif, NACK, sans envoyer d'ACK, ou l'envoi d'un ACK ou un NACK.

8. Appareil configuré pour exécuter le procédé selon l'une quelconque des revendications 1 à 4.

9. Appareil configuré pour exécuter le procédé selon l'une quelconque des revendications 5 à 7.

10. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 4 ou l'une quelconque des revendications 5 à 7.
